# EUROPEAN PATENT APPLICATION

(11) **EP 4 482 202 A1**
(43) Date of publication of application: **25.12.2024**
(21) Application number: 23755637.8
(22) Date of filing: 05.01.2023
(51) Int. Cl.: H04W 28/02, H04W 28/24

(54) **DATA TRANSMISSION METHOD AND APPARATUS**

(30) Priority: 18.02.2022 CN 202210153020
(71) Applicant: Datang Mobile Communications Equipment Co., Ltd., Beijing 100085 (CN)
(72) Inventor: TAO, Yuan, Beijing 100085 (CN); XIONG, Chunshan, Beijing 100085 (CN)
(74) Representative: Cabinet Nony
(86) International application number: PCT/CN2023/070686
(87) International publication number: WO 2023/155633

(57) **Abstract**

The present disclosure discloses a data transmission method and apparatus, which are applied to the technical field of communications. The method includes: receiving, by a UPF, user plane data used for transmitting a media unit, and detecting or determining a priority of the media unit; setting a priority identifier in the user plane data according to the priority, and sending the user plane data provided with the priority identifier to a network device, or mapping, by the UPF, the user plane data to a corresponding QoS flow according to the priority, and sending the user plane data mapped to the QoS flow to the network device.

## Description

### CROSS-REFERENCE TO RELATED APPLICATIONS

The present disclosure is national stage of the PCT Application No. PCT/CN2023/070686 filed on January 5, 2023, which claims the priority of the Chinese patent application No. 202210153020.7 filed to the CNIPA on February 18, 2022, and entitled "Data Transmission Method and Apparatus", of which the entire contents are incorporated herein by reference.

### TECHNICAL FIELD

The present disclosure relates to the technical field of communications, in particular to a data transmission method and apparatus.

### BACKGROUND OF THE INVENTION

With the development of the 5th generation mobile networks (5G) technology, high data rate and low latency (HDRLL) services, such as mobile multimedia services, cloud Augmented Reality (AR), Virtual Reality (VR), cloud games, video-based remote control machines or unmanned aerial vehicles, and real-time digital twin, are increasing.

With regard to the services above, how to enable a network device to transmit data according to a priority of a media unit is a technical problem that needs to be solved currently.

### SUMMARY OF THE INVENTION

Embodiments of the present disclosure provide a data transmission method and apparatus, which are used for enabling a network device to transmit data according to a priority of a media unit.

In a first aspect, a data transmission method is provided and includes: receiving, by a user plane function (UPF), user plane data used for transmitting a media unit, and detecting or determining a priority of the media unit; and setting a priority identifier in the user plane data according to the priority, and sending the user plane data provided with the priority identifier to a network device, or mapping, according to the priority, the user plane data to a corresponding quality of service (QoS) flow, and sending the user plane data mapped to the QoS flow to the network device.

According to an aspect in the above embodiment of the present disclosure, after receiving the user plane data, the UPF detects/determines the priority of the media unit in the data, and sets the priority identifier in the data according to the priority of the media unit, wherein the priority identifier is visible to the network device. In this way, after receiving the data, the network device can obtain the priority identifier, thereby optimizing resource scheduling according to the priority indicated by the priority identifier, and providing corresponding QoS assurance. According to another aspect in the above embodiment of the present disclosure, after receiving the user plane data, the UPF detects/determines the priority of the media unit in the data, and maps the data to the corresponding QoS flow according to the priority of the media unit. In this way, after receiving the data, the network device may perform resource scheduling according to QoS parameters corresponding to the QoS flow. Since the QoS flow corresponds to the priority of the media unit, the network device may optimize the resource scheduling according to the priority of the media unit, and provide the corresponding QoS assurance.

In a second aspect, a data transmission method is provided and includes: receiving, by a network device, user plane data used for transmitting a media unit, the user plane data including a priority identifier, and the priority identifier being used for indicating a priority of the media unit; acquiring, by the network device, the priority identifier in the user plane data; and performing, by the network device, resource scheduling on transmission of the user plane data according to the priority identifier.

In the above embodiment of the present disclosure, after receiving the user plane data, the network device detects the priority identifier included in the data, and performs resource scheduling on the transmission of the data according to the priority identifier. Since the priority identifier is used for indicating the priority of the media unit, the network device performs the resource scheduling on the data according to the priority of the media unit, for enabling the network device optimizing the resource scheduling according to the priority of the media unit, thereby providing corresponding QoS assurance.

In a third aspect, a data transmission method is provided and includes: setting a priority identifier in to-be-sent user plane data used for transmitting a media unit, the priority identifier being used for indicating a priority of the media unit; and sending the user plane data provided with the priority identifier to a UPF.

In some embodiments, the flow may be executed by an AF or a terminal (UE).

In the above embodiment of the present disclosure, the AF or the UE sets the priority identifier in the to-be-sent data, and since the priority identifier is used for indicating the priority of the media unit in the data, the network device may perform resource scheduling on the transmission of the data according to the priority of the media unit after receiving user plane data, thereby optimizing the resource scheduling by the network device according to the priority of the media unit, and providing corresponding QoS assurance.

In a fourth aspect, a data transmission method is provided and includes: receiving, by a policy control function (PCF), a request message from a session management function (SMF), the request message being used for requesting acquisition of a Policy and Charging Control (PCC); generating, by the PCF, the PCC according to the request message, the PCC being used for instructing to detect a priority of a media unit; and sending, by the PCF, a response message to the SMF, the response message including the PCC.

In the above embodiment of the present disclosure, the PCC generated by the PCF may instruct to detect the priority of the media unit, after receiving the PCC, the SMF may instruct a UPF to detect the priority of the media unit based on the PCC, then the UPF may perform corresponding processing according to the priority of the media unit, and thus a network device may optimize resource scheduling according to the priority of the media unit, and provide corresponding QoS assurance.

In a fifth aspect, a data transmission method is provided and includes: sending, by an AF, a request message to a PCF or a network exposure function (NEF), the request message including priority information, and the priority information being used for indicating a priority of a media unit.

In the above embodiment of the present disclosure, since the AF sends the priority information used for indicating the priority of the media unit to the PCF or the NEF, the PCF or the NEF may send the priority information to the SMF, the priority information is further sent to the UPF by the SMF, thus the UPF may determine the priority of the media unit according to the priority information, then the UPF may perform corresponding processing according to the priority of the media units, and the network device may optimize resource scheduling according to the priority of the media unit, thereby providing corresponding QoS assurance.

In a sixth aspect, a UPF network element is provided and includes: a receiving unit, configured to receive user plane data used for transmitting a media unit; a processing unit, configured to detect or determine a priority of the media unit, and set a priority identifier in the user plane data according to the priority, or map the user plane data to a corresponding QoS flow according to the priority; and a sending unit, configured to send the user plane data provided with the priority identifier to a network device, or send the user plane data mapped to the QoS flow to the network device.

In a seventh aspect, a network device is provided and includes: a receiving unit, configured to receive user plane data used for transmitting a media unit, the user plane data including a priority identifier, and the priority identifier being used for indicating a priority of the media unit; and a processing unit, configured to acquire the priority identifier in the user plane data, and perform resource scheduling on transmission of the user plane data according to the priority identifier.

In an eighth aspect, a terminal is provided and includes: a processing unit, configured to set a priority identifier in to-be-sent user plane data used for transmitting a media unit, the priority identifier being used for indicating a priority of the media unit; and a sending unit, configured to send the user plane data provided with the priority identifier to a UPF.

In a ninth aspect, a PCF network element is provided and includes: a receiving unit, configured to receive a request message from an SMF, the request message being used for requesting acquisition of a PCC; a processing unit, configured to generate the PCC according to the request message, the PCC being used for instructing to detect a priority of a media unit; and a sending unit, configured to send a response message to the SMF, the response message including the PCC.

In a tenth aspect, an AF network element is provided and includes: a sending unit, configured to send a request message to a PCF or an NEF, the request message including priority information, and the priority information being used for indicating a priority of a media unit.

In an eleventh aspect, an AF network element is provided and includes: a processing unit, configured to set a priority identifier in to-be-sent user plane data used for transmitting a media unit, the priority identifier being used for indicating a priority of the media unit; and a sending unit, configured to send the user plane data provided with the priority identifier to a UPF.

In a twelfth aspect, a data transmission apparatus is provided and includes: a processor, a memory and a transceiver. The transceiver receives and sends data under control of the processor; the memory stores computer instructions; and the processor is configured to read the computer instructions to execute the method according to any one of the first aspect above, or the method according to any one of the second aspect above, or the method according to any one of the third aspect above, or the method according to any one of the fourth aspect above, or the method according to any one of the fifth aspect above.

In a thirteenth aspect, a computer readable storage medium is provided. The computer readable storage medium stores computer executable instructions, and the computer executable instructions are used for causing a computer to execute the method according to any one of the first aspect above, or the method according to any one of the second aspect above, or the method according to any one of the third aspect above, or the method according to any one of the fourth aspect above, or the method according to any one of the fifth aspect above.

In a fourteenth aspect, a computer program product is provided. The computer program product, when called by a computer, causes the computer to execute the method according to any one of the first aspect above, or the method according to any one of the second aspect above, or the method according to any one of the third aspect above, or the method according to any one of the fourth aspect above, or the method according to any one of the fifth aspect above.

### BRIEF DESCRIPTION OF DRAWINGS

To describe technical solutions of embodiments of the present disclosure more clearly, the following briefly introduces accompanying drawings needing to be used in the embodiments of the present disclosure. Apparently, the accompanying drawings introduced below are only some embodiments of the present disclosure, and those ordinarily skilled in the art may still derive other accompanying drawings from these accompanying drawings without creative efforts.
FIG. 1 is a schematic diagram of transmission of a video coding bit NAL unit of an XR service in an IP network in an embodiment of the present disclosure.
FIG. 2 is a schematic structural diagram of an NAL unit in an embodiment of the present disclosure.
FIG. 3 is a schematic diagram of a slice in a frame of picture in an embodiment of the present disclosure.
FIG. 4 is a schematic diagram of a tile in a frame of picture in an embodiment of the present disclosure.
FIG. 5 is a schematic diagram of multi-view video data collection in an embodiment of the present disclosure.
FIG. 6 is a schematic structural diagram of an IPv4 message in an embodiment of the present disclosure.
FIG. 7 is a schematic diagram of a payload header of an RTP packet in an embodiment of the present disclosure.
FIG. 8 is a schematic architectural diagram of a non-roaming 5G system in an embodiment of the present disclosure.
FIG. 9 is a schematic flow diagram of transmitting media units with different priority requirements in the same QoS flow provided by an embodiment of the present disclosure.
FIG. 10 is a schematic diagram of a data transmission flow in which media units with different priority requirements are mapped to different QoS flows provided by an embodiment of the present disclosure.
FIG. 11 is a schematic flow diagram of determining a priority of a media unit based on a priority identifier and transmitting media units with different priority requirements in the same QoS flow in an embodiment of the present disclosure.
FIG. 12 is a schematic diagram of a data transmission flow in which a priority of a media unit is determined based on a priority identifier and media units with different priority requirements are mapped to different QoS flows provided by an embodiment of the present disclosure.
FIG. 13 is a schematic flow diagram of determining a priority of a media unit based on priority information and transmitting media units with different priority requirements in the same QoS flow provided by an embodiment of the present disclosure.
FIG. 14 is a schematic diagram of an uplink data transmission flow provided by an embodiment of the present disclosure.
FIG. 15 is a schematic structural diagram of a UPF provided by an embodiment of the present disclosure.
FIG. 16 is a schematic structural diagram of a network device provided by an embodiment of the present disclosure.
FIG. 17 is a schematic structural diagram of a terminal provided by an embodiment of the present disclosure.
FIG. 18 is a schematic structural diagram of a PCF provided by an embodiment of the present disclosure.
FIG. 19 is a schematic structural diagram of an AF provided by an embodiment of the present disclosure.
FIG. 20 is a schematic structural diagram of a data transmission apparatus provided by an embodiment of the present disclosure.

### DETAILED DESCRIPTION OF THE INVENTION

In order to make objectives, technical solutions and advantages of the present disclosure clearer, the present disclosure will be further described in detail below with reference to accompanying drawings. Obviously, the described embodiments are only part of the embodiments of the present disclosure, but not all the embodiments. On the basis of the embodiments in the present disclosure, all other embodiments obtained by those ordinarily skilled in the art without creative work fall within the protection scope of the present disclosure.

Part of terms in the embodiments of the present disclosure is explained and illustrated below to facilitate understanding for those skilled in the art.

(1) In the embodiments of the present disclosure, terms "network" and "system" are often used interchangeably, but the meanings thereof can be understood by those skilled in the art.

(2) A term "a plurality of" in the embodiments of the present disclosure refers to two or more than two, and other quantifiers are similar thereto.

(3) "And/or" describes an association relationship of associated objects, and represents that there may be three kinds of relationships, for example, A and/or B may represent three cases that: A exists alone, A and B exist at the same time, and B exists alone. A character "/" generally represents that the associated objects in front of and behind the character are in an "or" relationship.

To make the present disclosure be understood clearer, the technology and technical terms involved in the present disclosure are first illustrated below.

### (I) Extended-range (XR) service.

An XR technology is an extended display technology combining Augmented Reality (AR), Virtual Reality (VR), and Mixed Reality (MR) technologies, can achieve a glasses-free 3D effect, can achieve synchronous transmission of real-time picture data, and may be applied to various fields such as medical and educational learning industries, office scenario meetings, tourism, military affairs, stage effects, movies and shopping.

Based on a standard of high efficiency video coding (HEVC), a coded video stream of the XR service is formed by sequentially arranging a series of group of picture (GoP). A first frame of one GoP is an I frame (also referred to as a key frame), then a P frame is included, and a B frame may further be included. The I frame is an intra-frame coded picture, the P frame is a forward predictive frame (also referred to as a forward reference frame), and the B frame is a bidirectional interpolated frame (also referred to as a bidirectional reference frame). It may be considered that the I frame is a complete picture, and the P frame and the B frame record a change relative to the I frame. If there is no I frame, the P frame and the B frame cannot be decoded. The I frame in one GoP may also be used as an instantaneous decoding refresh (IDR) frame. The IDR frame is a forced refresh frame; and when receiving the IDR frame, a decoder discards all reference frame queues and restarts decoding to prevent an error from being propagated.

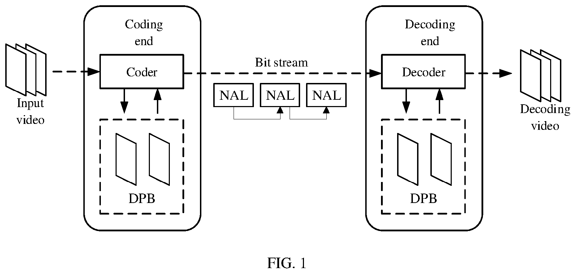

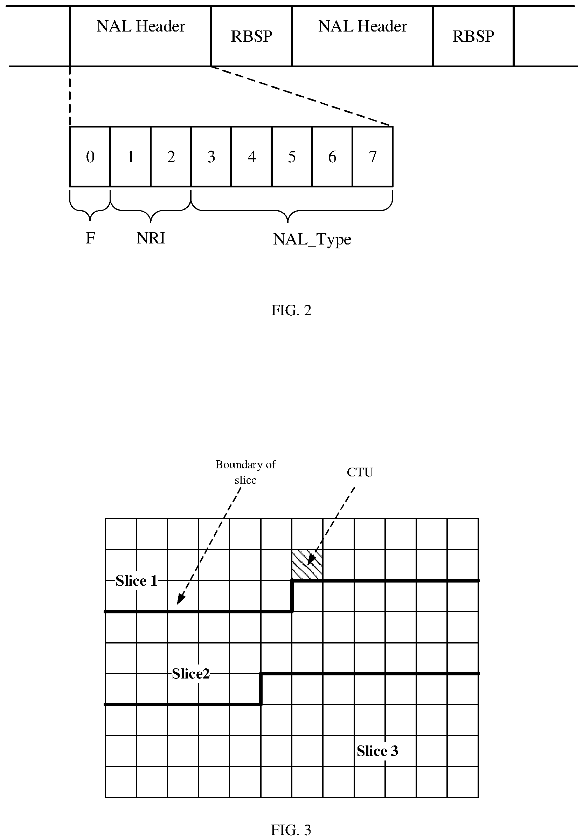

A video coding bit stream of the XR service is divided into several network abstract layer (NAL) units, as shown in FIG. 1. When the NAL units are transmitted in an IP network, a size of the NAL unit should be smaller than that of a maximum transmission unit (MTU) allowed by the network. Each NAL unit is composed of a byte of NAL header and a subsequent NAL unit payload, and the NAL unit payload is also referred to as a raw byte sequence payload (RBSP). FIG. 2 exemplarily shows a structure of the NAL unit. The NAL header includes the following bit flags:
a forbidden flag bit (F): a first bit, with a value of 1 indicating a syntax error;
priority (Nal_Referrence_Idc, NRI): 2^{nd} to 3^{rd} bits, being reference levels used for identifying the importance of the NAL units; and
NAL_type: 4^{th} to 8^{th} bits, being used for identifying types of the NAL units.

A frame of picture may be divided into slices or tiles, and the slices may be further divided into slice segments (SS).

### (1) Slice:

The Slice may not depend on a data structure independently coded by other Slices of the same picture, and FIG. 3 exemplarily shows the Slice in a frame of picture. Each block in FIG. 3 represents one coding tree unit (CTU), and one CTU may be divided into a coding unit (CU), a prediction unit (PU) and a transform unit (TU). The coded data corresponding to one Slice may include signal prediction, residual signal reconstruction, and entropy coding. The main purpose of using the Slice is to ensure decoding synchronization again after the data is lost. Each Slice is encapsulated into one NAL unit for transmission. A maximum number of bits is often used to limit the capacity of the slices. For example, for packet transmission in a wired or wireless network, the capacity of the slice is required to be less than a capacity of the maximum transmission unit (MTU).

According to the coding type, the Slice may be divided into:
I Slice: coding processes of all coding units (CUs) in the Slice use intra-frame prediction;
P Slice: on the basis of the I Slice, the CUs in the Slice may further use inter-frame prediction, and each prediction block (PB) uses at most one piece of motion compensation prediction information; P Slice uses only a picture reference list list0; and
B Slice: on the basis of the P Slice, the CUs in the B Slice may also use inter-frame prediction, but each PB may use at most two pieces of motion compensation prediction information. B Slice may use picture reference lists list 0 and list 1.

### (2) Tile:

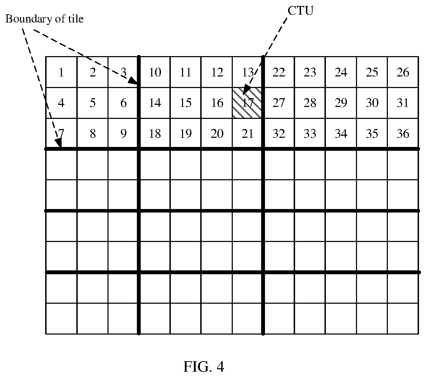

The picture frame is divided into a plurality of rectangular regions by using several horizontal and vertical boundaries, and each rectangular region is a tile, and is also an independent coding unit. The main purpose of the tile division is to enhance a parallel processing capability, but not to provide error robustness. FIG. 4 exemplarily shows an example of tile division. The divided Tile does not require uniform distribution, and the whole picture is divided into 12 Tiles, and each Tile is a rectangle.

The rectangular pixel data division provided by the Tile facilitates region of interesting (ROI) coding, and the region of interesting may be marked simply. The different Tiles of the picture may be further divided into an ROI part and a non-ROI part. A coder allocates different coding resources to different types of Tiles, and may allocate more computing capability to the Tile marked as the ROI. In order to segment the Tile into data packets complying with an MTU size, the Tile of the ROI part and the Tile of the non-ROI part of the frame are separately encapsulated into different NAL units.

According to different types of carried data, the NAL units may be divided into two types: one type is video coding layer NAL (VCL NAL) unit, including coded data, such as a coded Slice NAL unit or Tile NAL unit, and the other type is a non-video coding layer NAL (non-VCL NAL) unit, including control data generally belonging to multiple coded pictures, such as a parameter set NAL unit. The parameter set NAL unit includes the following types:
A video parameter set (VPS) is mainly used for transmitting video classification information, which facilitates compatibility with extension of standards in scalable video coding or multi-view videos.

The sequence parameter set (SPS): SPS stores global parameters of a group of coded video sequences. The so-called coded video sequence is a sequence formed by structures after pixel data of a frame of an original video is coded. The parameters on which the coded data of each frame depends are stored in the picture parameter set. Generally, the NAL units of the SPS and a PPS are usually located at a start location of an entire code stream.

A picture parameter set (PPS): includes a common parameter used by a picture, that is, all Slice segments (SS) in the picture refer to the same PPS.

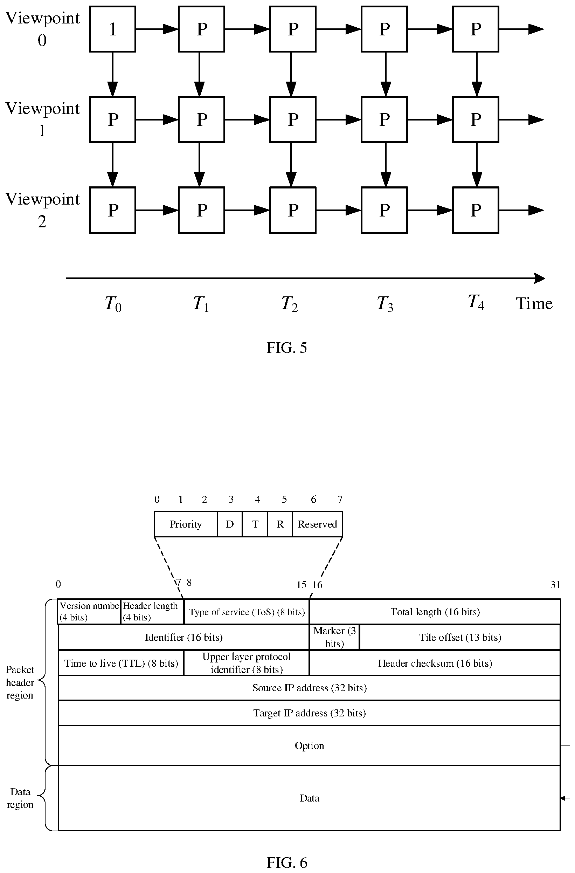

For a 3D video and the multi-view video, a most common manner for collecting a three-dimensional video is implemented by photographing a target scenario by using two cameras horizontally spaced at a certain distance. The two cameras synchronously capture two segments of video, one being a left-eye video and the other being a right-eye video, collectively referred to as a binocular video. In this way, a user can be provided with stereoscopic imaging by acquiring the binocular video through a stereoscopic image display device. If more than two cameras are used to photograph the same scenario at different locations, synchronized multiple segments of video, namely, multi-view video collecting is formed, with each segment corresponding to one viewpoint. As shown in FIG. 5, each viewpoint sends one I frame, P frame, or B frame at each moment.

### (II) IP data packet, also known as an IP message.

For IPv4, FIG. 6 exemplarily shows a structure of an IPv4 message. The IPv4 message includes a header (or referred to as a head) and a data part. The header of the IPv4 message includes a type of service (ToS) field with one byte length, and the field is also referred to as a differentiated services code point (DSCP) field. The field may be used for carrying QoS priority information to obtain better services. The field occupies 8 bits, and the ToS field (or referred to as the DSCP field) includes 5 sub-domains:
(1) IP priority field: occupying the first 3 bits of the ToS field, wherein a larger numeric value indicates a higher priority. A router in the network may use the priority to perform congestion control, for example, when the network is congested, acception or rejection of the data packet may be determined according to the priority in the IP message header.
   Exemplarily, the three bits may be classified into eight IP priorities, and may be applied to flow classification, that is, a relationship between values of the eight IP priorities and the type of service includes:
   IP priority equal to 7, reserved;
   IP priority equal to 6, reserved;
   IP priority equal to 5, speech;
   IP priority equal to 4, video conference;
   IP priority equal to 3, call signal;
   IP priority equal to 2, high priority data;
   IP priority equal to 1, medium priority data; and
   IP priority equal to 0, best effort service data.
(2) Delay (D) bit: namely, a short delay bit, occupying 1 bit; when the value of the bit is equal to 1, it indicates that the IP data packet requests to be transmitted on a short delay channel; and when the value of the bit is equal to 0, it indicates that the IP data packet requests to be transmitted at a normal delay.
(3) Throughput (T) bit: namely, a high-throughput bit, occupying 1 bit; when the value of the bit is equal to 1, it indicates that the IP data packet requests to be transmitted on a high-throughput channel; and when the value of the bit is equal to 0, it indicates that the IP data packet requests to be transmitted on a common-throughput channel.
(4) Reliability (R) bit: namely, a high-reliability bit, occupying 1 bit; when the value of the bit is equal to 1, it indicates that the IP data packet requests to be transmitted on a high-reliability channel; and when the value of the bit is equal to 0, it indicates that the IP data packet requests to be transmitted on an ordinary-reliability channel.
(5) Reserved field, occupying 2 bits.

For IPv6, a traffic class field in an IPv6 message header is used to identify a traffic flow class, or a priority class, of an IPv6 data packet. The traffic class field occupies 8 bits, which is similar to a type of service (ToS) field in the IPv4 message header.

### (III) Real-time transport protocol (RTP).

The RTP is a transport protocol for a multimedia data stream over the Internet. The RTP is defined as working in either one-to-one or one-to-many transmission scenarios, which aims to provide time information and achieve stream synchronization.

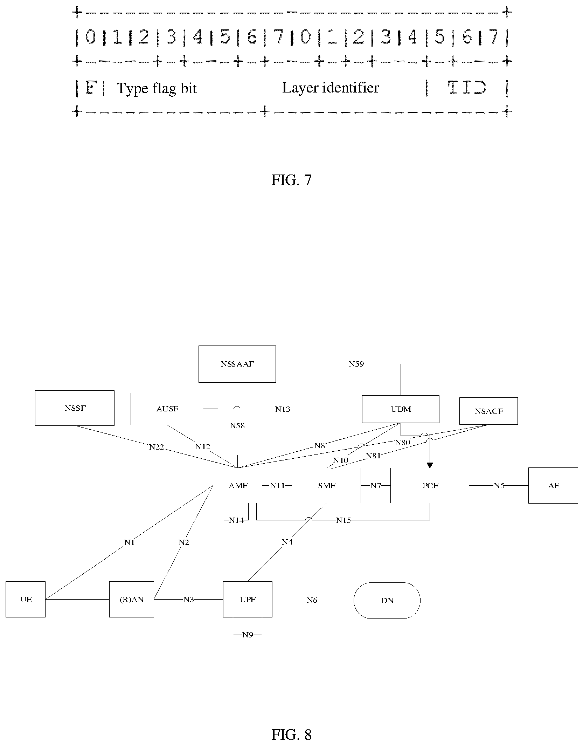

The first two bytes of the RTP packet are used as a payload header. FIG. 7 exemplarily shows a payload header of an RTP packet. The payload header is composed of 2 bytes, and the content thereof is similar to that of an NAL unit header field (for example, including a forbidden flag bit (F), a type flag bit (Type), a layer identifier (LayerId) and a tag identifier (TID)). A TID value represents the relative importance of the RTP packet, the lower the TID value, the higher the importance, which make a more important NAL unit with better prevent propagation loss than a less important NAL unit. For example, if the NAL unit belongs to a higher time-domain sub-layer, it is not used for decoding a lower time-domain sub-layer.

### (IV) 3GPP architecture.

FIG. 8 exemplarily shows a non-roaming 5G system architecture according to some embodiments of the present disclosure. Network elements (network devices) included in the architecture and their functions are introduced as follows:
AMF: the AMF is an abbreviation for an Access and Mobility Management Function. The AMF is used for performing registration and connection management.
UPF: the UPF is an abbreviation of a User Plane Function, and is an external packet data unit (PDU) session node interconnected with a data network. The UPF is used for performing message routing and forwarding.
SMF: the SMF is an abbreviation for a Session Management Function. The SMF is used for session creation and deletion, user plane selection and control, and IP address allocation of user equipment (UE, or terminal).
AF: AF is an abbreviation for an Application Function. The AF interacts with a 3GPP core network to provide services. Based on a deployment situation of an operator, the trusted AF may directly interact with a relevant network function (NF, such as PCF), while the non-trusted AF cannot directly interact with the NF, but uses an external disclosure framework to interact through a network exposure function (NEF).
PCF: the PCF is an abbreviation for a Policy Control Function. The PCF supports a unified policy framework to manage network behaviors and provide policy rules for controlling the execution of the plane NF.
NRF: the NRF is an abbreviation for a Network Repository Function. The NRF supports a service discovery function.
UDM: the UDM is an abbreviation of Unified Data Management, and is formed by two parts: one part is an application front end (FE), and the other part is a user data repository (UDR). The UDM is used for storing information of the UE, such as subscription information and information of a created PDU session.
NEF: NEF is an abbreviation for a Network Exposure Function. The NEF is used for securely exposing the services and capabilities provided by the 3GPP network to external network related functions.
UDR: UDR is an abbreviation for a Unified Data Repository. The UDR is used for storage of subscription data, retrieval of the subscription data by a UDM FE, storage of the policy information, and retrieval of the policy information by the PCF.
(R)AN: the (R)AN is an abbreviation for a (Radio) Access Network, and is a device that provides a wireless communication function for a terminal, including but not limited to: gNB in 5G. For other system architectures, the radio access network device may further include a radio network controller (RNC), a Node B (NB), a base station controller (BSC), a base transceiver station (BTS), a Femtocell (for example, a home evolved NodeB, or a home node B (HNB)), a baseband unit (BBU), a transmitting and receiving point (TRP), a transmitting point (TP), a mobile switching center, etc. The base station in the present disclosure may further be a device for providing a wireless communication function to a terminal in other communication systems which may appear in the future.

The terminal (UE) in the above system architecture is a device that may provide speech and/or data connectivity to a user. For example, the terminal includes a handheld device and a vehicle-mounted device with a wireless connection function. At present, the terminal may be: a mobile phone, a tablet computer, a notebook computer, a palm computer, a mobile Internet device (MID), a wearable device, a VR device, an AR device, a wireless terminal in industrial control, a wireless terminal in self-driving, a wireless terminal in a smart grid, a wireless terminal in transportation safety, a wireless terminal in a smart city, a wireless terminal in a smart home and the like.

It should be noted that the above 5G system architecture is only an example, and the embodiments of the present disclosure are not limited to be applied to the above system architecture, for example, an evolved system of the 5G system may also be applied to the embodiments of the present disclosure.

Based on the above system architecture, different types of service data need to be transmitted in the network, and a data unit transmitted between various peer layers is generally a protocol data unit (PDU). With regard to QoS flow mapping, the SMF binds a service data flow to a suitable QoS flow according to QoS and service requirements of the service data flow, allocates a QoS flow ID (QFI) to a newly established QoS flow, and generates a QoS profile, a UPF command, a QoS rule, etc. according to a Policy and Charging Control (PCC) and other information provided by the PCF.

The SMF sends a downlink data packet detection rule (PDR) including a downlink part of the service data flow template to the UPF, and the UPF classifies user plane traffic according to the information; and the SMF also sends QoS related information (e. g., QoS profile) corresponding to the PDR to the UPF, which enables the UPF performing marking and QoS control on the data packet based on the PDR classification.

The PDR is a group of packet filter sets, and exemplarily, may include:
- a source IP address or a destination IP address or an IPv6 prefix;
- a source port number or a target port number;
- a protocol ID over IP or the next header type;
- a service type (or a service level), and a mask; for IPv4, the service type may be included, and for IPv6, the service level may be included;
- for IPv6, a flow label may be included;
- a security parameter index; and
- packet filter direction.

At present, for an XR service, application layer parameters (for example, including a priority) are invisible to a core network and a base station. For application layer data with different importance (or different priorities) in the same QoS flow, only the same processing manner can be used, resulting in the inability to optimize resource scheduling for high-priority data and provide corresponding QoS assurance.

So embodiments of the present disclosure provide a data transmission method and apparatus, which enables a network device transmitting data according to parameters of an application layer, propose a cross-layer optimization solution enabling the parameters of the application layer to be visible to a network and a base station, perform differentiated resource allocation on media units or data packets of different importance, optimize resource scheduling, and provide corresponding QoS assurance.

The embodiments of the present disclosure may be applied to the transmission of XR service data, and may also be applied to a transmission process of data of other types of services, which are not limited in the embodiments of the present disclosure. Here, the data transmission of the XR service is taken as an example for description.

In the embodiment of the present disclosure, a media unit involved in data transmission of the XR service may include any one of a data frame, an application data unit (ADU), a group of picture (GoP), a slice, a slice segment, and a tile.

A data packet: may be a PDU.

The data frame: may contain one or more data packets, for example, an I frame, a B frame, and a P frame.

In the embodiment of the present disclosure, an application or a terminal allocates a corresponding service priority to an NAL unit that carries service data with different types or different priorities, and sets a priority identifier (referred to as a first priority identifier in some embodiments) used for indicating the priority in a header of the data packet. For example, the NAL units of the service data with the different types or the different priorities may include: an ROI Tile NAL unit, a non-ROI Tile NAL unit, a VPS NAL unit, an SPS NAL unit, a PPS NAL unit, a Slice (I Slice, P Slice, B Slice) NAL unit, a binocular (left-eye or right-eye, for a 3D video) NAL unit, a viewpoint (different viewpoints, for a multi-view videos, VR) NAL unit, etc.

Alternatively, for IPv4, the priority identifier may be set in a type of service (ToS) field of a data packet IP header. For example, the priority identifier may be set using reserved bits in the ToS field (such as 6^{th} and 7^{th} bits in the ToS field), or the priority identifier may also be set using the priority field in the ToS field (such as the first three bits in the ToS field), and the priority identifier may further be set using the reserved bits and the priority field in the ToS field. For IPv6, the priority identifier may be set in the traffic class field of the data packet IP header.

For example, the priority identifier may be set to be equal to 2 in the ToS field of an IP packet header of the data packet carrying the VPS NAL unit to indicate that the data carried in the data packet is high priority. The priority identifier may be set to be equal to 1 in the ToS field of the IP packet header of the data packet carrying the ROI Tail NAL unit or the I Slice NAL unit to indicate that the data carried in the data packet is medium priority. The priority identifier may be set to be equal to 0 in the ToS field of the IP packet header of the data packet carrying the non-ROI Tail NAL unit or the P Slice NAL unit or the B Slice NAL unit to indicate that the data carried in the data packet is low priority (best effort service data).

Alternatively, the application layer of a service data sending end (such as including UE and an AF) may also set the priority identifier in the RTP packet header of the data packet, such as in the TID field of the RTP packet header.

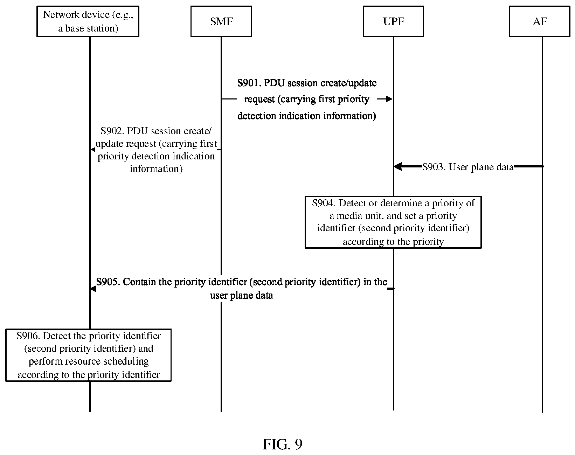

Referring to FIG. 9, FIG. 9 is a schematic diagram of a data transmission flow provided by embodiments of the present disclosure, and as shown in the figure, the flow may include the following steps:
S903: a UPF receives user plane data used for transmitting a media unit.

Alternatively, the user plane data is downlink data from an AF. Alternatively, the user plane data may be XR service data.

It may be understood that in the embodiments of the present disclosure, the user plane data used for transmitting the media unit includes a data packet header and a payload part, and the payload part is used for carrying service data, such as an NAL unit for an XR service.

In some embodiments, the packet header of the user plane data includes a first priority identifier, and the first priority identifier is used for indicating a priority of the media unit. Alternatively, the first priority identifier may be set by the AF according to a type or a priority of the NAL unit carried by the user plane data.

Alternatively, the first priority identifier may be carried in an RTP packet header or an IP packet header of the user plane data, and the specific implementations may be achieved as described above.

S904: the UPF detects or determines the priority of the media unit, and sets a priority identifier (referred to as a second priority identifier in the present flow) in the user plane data according to the priority of the media unit. The priority identifier may be detected by a network device (e.g., a base station).

In some embodiments, if the packet header of the user plane data includes the first priority identifier used for indicating the priority of the media unit, the UPF may detect the first priority identifier from the packet header, and then determine the priority of the media unit according to the first priority identifier. Specifically, according to a location of the first priority identifier, the UPF may detect the first priority identifier in the packet header of the user plane data by using one of the following detection manners:
detection manner 1: obtaining the first priority identifier by detecting from the IP packet header; and
detection manner 2: obtaining the first priority identifier by detecting from the RTP packet header.

In some other embodiments, if the packet header of the user plane data does not include the first priority identifier used for indicating the priority of the media unit, the UPF may determine an application layer priority of the media unit according to priority information used for indicating the priority of the media unit. Alternatively, the priority information may be sent by the AF to a PCF or an NEF, sent by the PCF or the NEF to an SMF, and then sent by the SMF to the UPF.

In one implementation, the priority information may be used for indicating a corresponding relationship between an order of the media unit in a data frame and the priority of the media unit. In this case, the UPF may determine the priority of the media unit according to the order of the media unit in the data frame. In another implementation, the priority information is used for indicating a corresponding relationship between a type of the media unit and the priority of the media unit. In this case, the UPF may determine the priority of the media unit according to the type of the media unit. In another implementation, the priority information is used for indicating a corresponding relationship between the priority of the media unit and an indication flag, and the UPF may determine a priority of the media unit corresponding to the indication flag according to the indication flag included in the user plane data.

Alternatively, the value of the first priority identifier and the value of the second priority identifier are the same, or there is a corresponding relationship between the first priority identifier and the second priority identifier.

In the embodiments of the present disclosure, compared to a location of the first priority identifier, the UPF may set the second priority identifier in an outer layer to enable the second priority identifier visible to the network device (e.g., the base station) (namely, it may be detected by the network device). For example, the UPF may set the second priority identifier by using one of the following setting manners:
Setting manner 1: the UPF sets the second priority identifier in a GPRS tunnelling protocol for the user plane (GTP-U) packet header of the user plane data. Alternatively, the second priority identifier is the same as the first priority identifier.

Setting manner 2: the UPF sets the second priority identifier in an outer IP packet header of the user plane data. Alternatively, the second priority identifier is the same as the first priority identifier.

Setting manner 3: the UPF obtains the second priority identifier by modifying a priority level parameter (such as Priority Level) in a group of QoS parameters corresponding to the first priority identifier according to the first priority identifier, and sets the second priority identifier in the GTP-U packet header or the outer IP packet header of the user plane data. Alternatively, the UPF may also send 5QI and modified priority level parameters (such as Priority Level) to the network device (e.g., the base station).

In the embodiment of the present disclosure, the first priority identifier may have a corresponding relationship with the 5QI. 5G Quality identity (5QI) is a scalar defined in 3GPP specification 23.501, and used for indicating a 5G QoS characteristic. One 5G QoS characteristic corresponds to a group of QoS parameters, for example, it may include: a priority level, a packet delay budget, a packet error rate, a default maximum databurst volume, a default averaging window, etc. These QoS parameters are used for controlling QoS flow forwarding processing. The UPF may acquire the 5QI corresponding to the first priority identifier according to the first priority identifier, acquire the corresponding group of QoS parameters according to the 5QI, and then modify the priority level in the group of QoS parameters for obtaining the second priority identifier.

S905: the UPF sends the user plane data provided with the priority identifier (the second priority identifier) to the network device (e.g., the base station).

S906: the network device (e.g., the base station) performs resource scheduling on transmission of the user plane data according to the priority identifier (the second priority identifier).

Alternatively, after receiving the user plane data, the network device (e.g., the base station) may obtain the second priority identifier through detection, acquire the corresponding 5QI according to the second priority identifier, acquire the group of corresponding QoS parameters (i.e., QoS configuration information) according to the 5QI, and perform resource scheduling according to the group of QoS parameters to transmit the user plane data.

Alternatively, if the network device (e.g., the base station) determines that the priority indicated by the priority identifier does not meet set requirements (for example, the priority is lower than a set threshold or the priority is the lowest priority), the user plane data is discarded or delayed to be sent.

Alternatively, the network device (e.g., the base station) may acquire the second priority identifier from the GTP-U packet header or the outer IP packet header of the user plane data.

Alternatively, before the UPF receives the user plane data, the method may further include the following steps:
S901: the UPF receives a PDU session create message or a PDU session update message from the SMF, the message includes first priority detection indication information, and the first priority detection indication information is used for instructing the UPF to detect or determine the priority of the media unit, and further perform corresponding processing, for example, setting a priority identifier (the second priority identifier) visible to the network device (e.g., the base station) in the user plane data according to the priority of the media unit.

Alternatively, before the network device (e.g., the base station) receives the user plane data, the method further includes the following steps:
S902: the network device (e.g., the base station) receives the PDU session create message or the PDU session update message from the SMF, the message includes first priority detection indication information, and the first priority detection indication information is used for instructing the network device (e.g., the base station) to detect the priority, and further perform corresponding processing, for example, performing resource scheduling on transmission of the user plane data according to the detected priority.

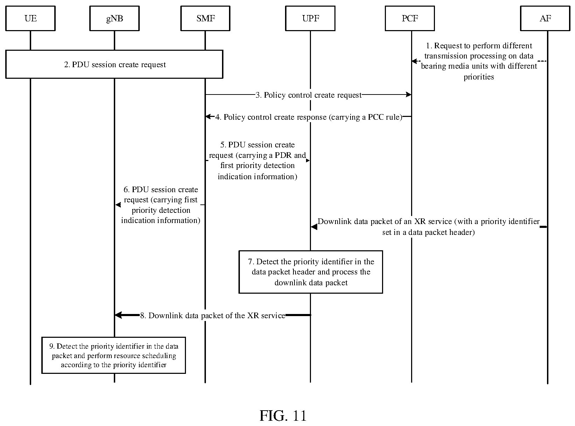

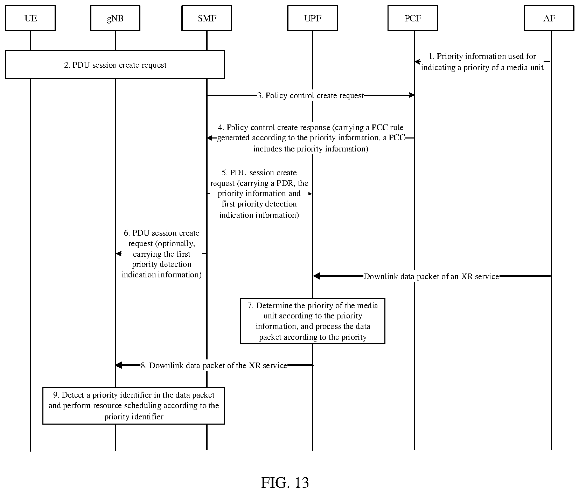

A specific implementation of the flow shown in FIG. 9 may be shown in FIG. 11, and another specific implementation may be shown in FIG. 13.

In the above flow, after receiving the user plane data, the UPF detects or determines the priority of the media unit, sets, according to the priority of the media unit, the second priority identifier that is visible to the network device (e.g., the base station) in the user plane data, and sends the user plane data provided with the second priority identifier to the network device (e.g., the base station), which enables the network device (e.g., the base station) obtaining the second priority identifier. Since the second priority identifier is set according to the first priority identifier, the priority of the media unit can be indicated, thereby enabling the network device (e.g., the base station) to optimize resource scheduling according to the priority of the media unit, and providing corresponding QoS assurance.

The above flow may be applied to the media units with different priority requirements (indicating the priority requirement by means of the priority identifier) in the same QoS flow, and can adjust resource scheduling and provide the corresponding QoS assurance.

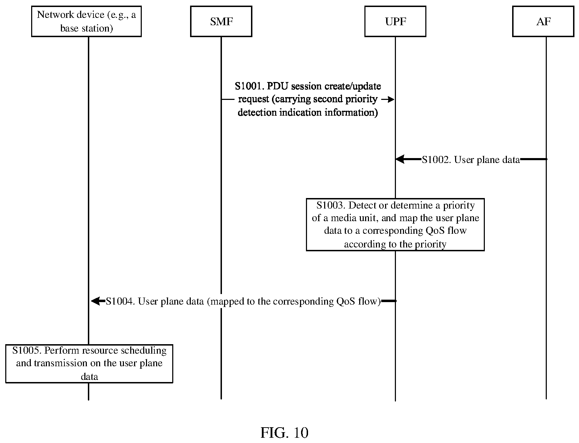

Referring to FIG. 10, FIG. 10 is a schematic diagram of a data transmission flow provided by an embodiment of the present disclosure, and as shown in the figure, the flow may include the following steps:
S1002: a UPF receives user plane data used for transmitting a media unit.

Description of the step S 1002 may be as in S903 in FIG. 9.

S1003: the UPF detects or determines a priority of the media unit, and maps the user plane data to a corresponding QoS flow according to the priority of the media unit.

Alternatively, an SMF may create the QoS flow, and allocate a QoS flow identifier (QFI) to the QoS flow, which enables the UPF mapping the user plane data to the corresponding QoS flow according to the priority of the media unit.

Alternatively, the QoS flow created by the SMF may include a GBR QoS flow and a non-GBR QoS flow. According to different QoS class identifiers (QCI), a bearer may be divided into two categories: guaranteed bit rate (GBR) bearer and a Non-GBR bearer. The GBR bearer is used for a service with high real-time requirement, which needs a scheduler to ensure a lowest bit rate for the kind of bearer. The non-GBR bearer is used for a service with low real-time requirements, which does not need the scheduler to ensure the lowest bit rate for the kind of bearer.

In the present step, if the UPF determines that the priority of the media unit is high priority, a data packet may be mapped to a GBR QoS flow, and if the UPF determines that the priority of the media unit is low priority, the data packet may be mapped to a non-GBR QoS flow.

In S 1003, the specific implementation of the UPF detecting or determining the priority of the media unit may be related in S904 in FIG. 9.

S 1004: the UPF sends the user plane data mapped to the QoS flow to a network device (e.g., a base station).

S1005: the network device (e.g., the base station) performs resource scheduling and transmission on the user plane data.

In the present step, exemplarily, if the user plane data is mapped to the GBR QoS flow, the network device (e.g., the base station) may use the GBR bearer to perform resource scheduling and transmission on the data packet; and if the user plane data is mapped to the non-GBR QoS flow, the network device (e.g., the base station) may use the non-GBR bearer to perform resource scheduling and transmission on the data packet.

Alternatively, if the network device (e.g., the base station) determines that the priority indicated by a priority identifier does not meet set requirements (for example, the priority is lower than a set threshold or the priority is a lowest priority), the user plane data is discarded or delayed to be sent.

Alternatively, before the UPF receives the user plane data, the method may further include the following steps:
S1001: the UPF receives a PDU session create message or a PDU session update message from the SMF, the message includes second priority detection indication information, and the second priority detection indication information is used for instructing the UPF to detect or determine the priority of the media unit, and further perform corresponding processing, for example, mapping the user plane data to the corresponding QoS flow according to the priority of the media unit.

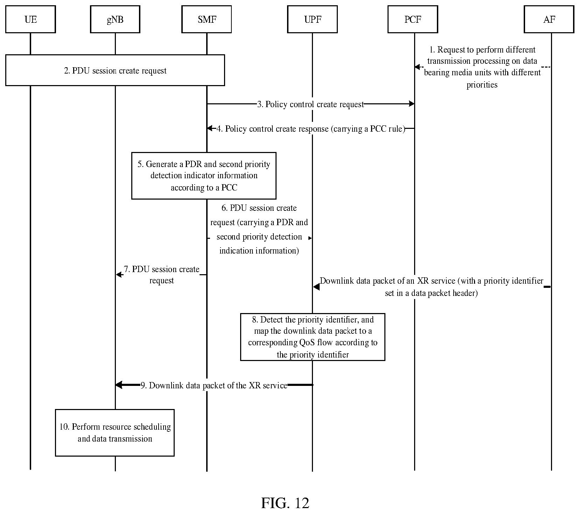

A specific implementation of the flow shown in FIG. 10 may be shown in FIG. 12.

In the above flow, after receiving the user plane data, the UPF detects or determines the priority of the media unit, maps the user plane data to the corresponding QoS flow according to the priority of the media unit, and sends the user plane data mapped to the QoS flow to the network device (e.g., the base station), which enables the network device (e.g., the base station) performing resource scheduling according to QoS parameters corresponding to the QoS flow. Since the QoS flow corresponds to the priority of the media unit, the network device (e.g., the base station) can optimize resource scheduling according to the priority of the media unit, and provide corresponding QoS assurance.

The above flow may be applied to the media units with different priority requirements (indicating the priority requirement by means of the priority identifier), and may map the media units to the different QoS flows, for adjusting resource scheduling, and providing the corresponding QoS assurance.

FIG. 11 exemplarily shows a schematic diagram of a data transmission flow. The flow is based on a 5G system architecture shown in FIG. 8, takes XR service data transmission as an example, and performs grading on downlink data packets mapped to the same QoS flow, which enables gNB adopting different transmission mechanisms for the downlink data packets carrying media units with different priorities.

As shown in FIG. 11, the flow may include the following steps:
step 1: an AF of an XR service requests from a core network of a 5G system to perform different transmission processing on the downlink data packets carrying the media units with the different priorities.

Alternatively, in the present step, the AF may send a request message to a PCF in the core network of the 5G system for requesting to perform transmission processing in different manners on the downlink data packets carrying the media units with the different priorities of the XR service. Alternatively, the request message may include:
a session create request (Nnel_AFsessionWithQoS_Create);
a session update request (Nnel_AFsessionWithQoS_Update); and
a policy authorization create request (Npcf_PolicyAuthorization_Create) or a policy authorization update request (Npcf_PolicyAuthorization_Update), etc.

It should be noted that step 1 is an optional step. For example, in some other embodiments, the PCF may also determine by itself whether to perform transmission processing in different manners on the downlink data packets carrying the media units with the different priorities of the XR service.

Step 2: an SMF receives a PDU session create request sent by UE, and creates a PDU session according to the received request.

Step 3: after receiving the PDU session create request from the UE, the SMF sends a policy control create request (such as an Npcf_SMpolicyControl_Create message) to the PCF for requesting a control policy from the PCF.

Alternatively, the policy control create request sent by the SMF may include information such as a session identifier, single network slice selection assistance information (S-NSSAI), and a data network name (DNN).

It may be understood that the PDU session create request sent by the UE is firstly sent to the AMF, and after selecting the SMF, the AMF sends the PDU session create request to the selected SMF.

Step 4: After receiving the policy control create request from the SMF, the PCF sends a policy control create response (such as an Npcf_SMpolicyControl_CreateResp message) to the SMF, wherein the response includes a PCC rule, and the PCC rule is used for indicating that the priority of the media unit needs to be detected/determined.

Alternatively, the PCC rule may include first priority detection indication information, which is used for indicating that the priority of the media unit needs to be detected/determined.

Alternatively, in the present step, the PCF may determine whether the PDU session is used for transmitting an XR service according to information such as S-NSSAI and DNN included in the received policy control create request. If the PCF determines that the PDU session is used for transmitting the XR service, and determines that different transmission processing needs to be performed on the downlink data packets carrying the media units with the different priorities for ensuring transmission of data carrying a media unit with high priority, the PCF indicates through the PCC rule that it needs to perform priority detection/determination on the media unit.

Alternatively, in some embodiments, the PCF may determine, according to a network policy, whether to perform different transmission processing on the downlink data packets carrying the media units with the different priorities. In some other embodiments, the PCF may also determine whether to perform different transmission processing on the downlink data packets carrying the media units with the different priorities according to requirements of an application layer, for example, according to a request from the AF (for example, a request sent by the AF in step 1).

Step 5: after receiving the policy control create response, the SMF generates a data packet detection rule (PDR) according to the PCC rule carried in the response, and sends the PDU session create request to the UPF, wherein the request may include the generated PDR, and may further include the first priority detection indication information. Based on the PDR, the UPF may perform media unit priority detection/determination on the data packets and perform corresponding processing.

In the present step, if the PCC rule received by the SMF from the PCF is used for indicating that priority detection/determination needs to be performed on the media unit, and further, the PCC rule does not include the first priority detection indication information, the SMF generates the first priority detection indication information according to the PCC rule, and sends the first priority detection indication information to the UPF; and if the PCC rule received by the SMF from the PCF includes the first priority detection indication information, the SMF may send the first priority detection indication information to the UPF.

Step 6: the SMF sends the PDU session create request to the gNB, wherein the PDU session create request includes the first priority detection indication information.

In the present step, the SMF may send the PDU session create request including the first priority detection indication information to the AMF by calling an interface for message transmission (such as Namf_Communication_N1N2MessageTransfer) according to the PCC rule, and the AMF sends the first priority detection indication information to the gNB through an N2 message.

Alternatively, the PDU session create request may further include a QoS profile.

After the PDU session is created, the AF sends an XR service data flow (the plurality of downlink data packets of the XR service form the XR service data flow) to the UPF. A packet header of the downlink data packet includes a priority identifier, wherein the priority identifier is used for identifying a priority of XR service data (namely, the priority of the media unit), and the priority identifier may be set by the application layer, for example, set by the AF.

Alternatively, according to a type of to-be-sent user plane data, the AF sets an IP packet header or an RTP packet header in the downlink data packet encapsulating the type of data for indicating the priority of the media unit. Alternatively, the priority identifier is set in the IP packet header. For IPv4, the priority identifier may be set in a priority field or a reserved field in a DSCP field (or referred to as a ToS field) in the IP packet header. For IPv6, the priority identifier may be set in a traffic class field in the IP packet header. For example, for an IP data packet carrying a VPS NAL unit, a priority identifier occupying the first three bits in the ToS field of a packet header is set to be equal to 2, for indicating that the priority of the media unit is high priority. For an IP data packet carrying an ROI Tail NAL unit, the priority identifier occupying the first three bits in the ToS field of the packet header is set to be equal to 1, for indicating that the priority of the media unit is medium priority. Alternatively, the AF may also set the RTP packet header in the downlink data packet, for example, the AF sets the priority identifier in a TID field of the RTP packet header to indicate the priority of the media unit.

Alternatively, if the AF determines that the priority of the media unit in the to-be-sent data does not meet set requirements (for example, the priority is lower than a set threshold or the priority is a lowest priority), the data may be discarded or delayed to be sent.

Step 7: after receiving the XR service data flow, the UPF detects the priority identifier in the downlink data packet, and processes the downlink data packet according to the detected priority identifier, for enabling the gNB obtaining the priority through detection.

Alternatively, in the present step, since the UPF previously receives the PDR from the SMF, and the PDR is used for instructing to detect the priority of the media unit, the UPF detects the priority identifier in the downlink data packet according to the PDR, and processes the downlink data packet in one of the following manners, for enabling the gNB obtaining the priority through detection:

Manner 1: the UPF adds the priority identifier to a GTP-U packet header.

Manner 2: The UPF replicates the priority identifier to the outer IP data packet header, for example, for the IPv4, the priority identifier is added to the DSCP field in the outer IP data packet header.

Manner 3: the UPF acquires 5QI corresponding to the priority identifier, acquires a corresponding group of QoS parameters according to the 5QI, and adjusts a priority level in the group of QoS parameters according to the priority corresponding to the priority identifier. Alternatively, if the Priority Level is a priority level parameter for the QoS flow, the UPF may send the Priority Level together with the 5QI to the gNB; and if the Priority Level is a priority level parameter for the media unit, the UPF may send the adjusted Priority Level to the gNB by adding the Priority Level in the GTP-U data packet header or the outer IP data packet header.

Step 8: the UPF sends the processed IP data packet to the gNB.

Alternatively, if the UPF determines, according to the priority identifier included in the downlink data packet, that the priority indicated by the priority identifier does not meet the set requirements (for example, the priority is lower than the set threshold, or the priority is the lowest priority), the downlink data packet may be discarded or delayed to be sent.

Step 9: after receiving the downlink data packet, the gNB detects the priority identifier carried in the downlink data packet, and performs resource scheduling according to the priority identifier.

In the present step, the gNB detects the priority identifier in the downlink data packet, matches the corresponding QoS parameters according to the priority indicated by the priority identifier, and performs resource allocation and scheduling according to the matched QoS parameters. For example, if a value of the detected priority identifier is equal to 3, the gNB determines the corresponding 5QI according to the priority, acquires a group of locally configured QoS parameters corresponding to the 5QI, and performs resource allocation and scheduling according to the group of QoS parameters.

According to the processing manner of the UPF for the downlink data packet mentioned above, in step 9, the gNB may use corresponding manners to detect the priority identifier. For example, if the UPF adds the priority identifier to the GTP-U packet header by using the above manner 1, the gNB detects the priority identifier in the GTP-U packet header; if the UPF adds the priority identifier to the packet header of the outer IP data packet by using the above manner 2, the gNB detects the priority identifier in the packet header of the outer IP data packet; and if the UPF adjusts the Priority Level parameters indicated by the 5QI corresponding to the priority identifier by using the above manner 3, the gNB detects the priority identifier in the data packet by itself, for example, obtaining the Priority Level by detecting from the GTP-U data packet header or the outer IP data packet header.

Alternatively, when current wireless resources are insufficient or a network is in a congested status, the gNB may discard the data packet carrying the media unit with the lowest priority or delay sending the data packet carrying the media unit with the lowest priority.

The above flow is described by using the example of newly creating the PDU session, and a PDU session update process may also refer to the above flow to achieve data transmission for the XR service. For example, the PDU session create request in the above flow may be replaced with a PDU session update request, and other processing operations are similar to the above flow.

FIG. 12 exemplarily shows a schematic diagram of a data transmission flow. The flow is based on a 5G system architecture shown in FIG. 8, takes XR service data transmission as an example, and maps downlink data packets carrying media units with different priorities to different levels of QoS flows, for enabling the gNB adopting different transmission mechanisms for XR service data carrying the media units with the different priorities.

As shown in FIG. 12, the flow may include the following steps:
step 1: an AF of an XR service requests from a core network of a 5G system to perform different transmission processing on the downlink data packets carrying the media units with the different priorities.

Alternatively, in the present step, the AF may send a request message to a PCF in the core network of the 5G system for requesting to perform transmission processing in different manners on the downlink data packets carrying the media units with the different priorities of the XR service. Alternatively, the request message may include:
a session create request (Nnel_AFsessionWithQoS_Create);
a session update request (Nnel_AFsessionWithQoS_Update); and
a policy authorization create request (Npcf_PolicyAuthorization_Create) or a policy authorization update request (Npcf_PolicyAuthorization_Update), etc.

It should be noted that step 1 is an optional step. For example, in some other embodiments, the PCF may also determine by itself whether to perform transmission processing in different manners on the downlink data packets carrying the media units with the different priorities of the XR service.

Step 2: an SMF receives a PDU session create request sent by UE, and creates a PDU session according to the received request.

Step 3: after receiving the PDU session create request from the UE, the SMF sends a policy control create request (such as an Npcf_SMpolicyControl_Create message) to the PCF for requesting a control policy from the PCF.

Alternatively, the policy control create request sent by the SMF may include information such as a session identifier, single network slice selection assistance information (S-NSSAI), and a data network name (DNN).

It may be understood that the PDU session create request sent by the UE is firstly sent to the AMF, and after selecting the SMF, the AMF sends the PDU session create request to the selected SMF.

Step 4: After receiving the policy control create request from the SMF, the PCF sends a policy control create response (such as an Npcf_SMpolicyControl_CreateResp message) to the SMF, wherein the policy control create response includes a PCC rule, and the PCC rule is used for indicating that the priority of the media unit needs to be detected/determined and the data packet is mapped to a corresponding QoS flow based on the priority of the media unit.

Alternatively, the PCC rule may include second priority detection indication information, which is used for indicating that the priority of the media unit needs to be detected/determined and the data packet is mapped to the corresponding QoS flow based on the priority of the media unit.

Alternatively, in the present step, the PCF may determine whether the PDU session is used for transmitting an XR service according to information such as the S-NSSAI and the DNN included in the received policy control create request. If the PCF determines that the PDU session is used for transmitting the XR service, and determines that different transmission processing (for example, using higher QoS assurance for a data packet with high priority and ordinary QoS assurance for a data packet with a low priority) needs to be performed on the downlink data packets carrying the media units with the different priorities to ensure transmission of data carrying a media unit with high priority, the PCF indicates through the PCC rule that priority of the media unit needs to be detected/determined and the data is mapped to the corresponding QoS flow based on the priority of the media unit.

Alternatively, in some embodiments, the PCF may determine, according to a network policy, whether to perform different transmission processing on the downlink data packets carrying the media units with the different priorities. In some other embodiments, the PCF may also determine whether to perform different transmission processing on the downlink data packets carrying the media units with the different priorities according to requirements of an application layer, for example, according to a request from the AF (for example, a request sent by the AF in step 1).

Step 5: after receiving the policy control create response, the SMF generates a data packet detection rule (PDR) according to the PCC rule carried in the response.

Alternatively, the data packet detection rule (PDR) may include a corresponding relationship between the priority identifier and the QoS flow.

In the present step, the SMF establishes the QoS flow, allocates a QoS flow identifier (QFI) to the newly established QoS flow, and binds the PCC rule to the appropriate QoS flow. Alternatively, the QoS flow created by the SMF may include a GBR QoS flow and/or a non-GBR QoS flow.

Step 6: the SMF sends the PDU session create request to the UPF, wherein the request may include the data packet detection rule (PDR) generated by the SMF, and may further include the second priority detection indication information.

In the present step, if the PCC rule received by the SMF from the PCF is used for indicating that the priority of the media unit needs to be detected/determined, and further, the PCC rule does not include the second priority detection indication information, the SMF generates the second priority detection indication information according to the PCC rule, and sends the second priority detection indication information to the UPF; and if the PCC rule received by the SMF from the PCF includes the second priority detection indication information, the SMF may send the second priority detection indication information to the UPF.

Step 7: the SMF sends the PDU session create request to the gNB.

Alternatively, the SMF generates a QoS profile according to the received PCC rule, and sends the QoS profile and the OoS flow identifier (QFI) to the gNB.

After the PDU session is created, the AF sends an XR service data flow (the plurality of downlink data packets of the XR service form the XR service data flow) to the UPF. A packet header of the downlink data packet includes a priority identifier, wherein the priority identifier is used for identifying a priority of XR service data (namely, the priority of the media unit), and the priority identifier may be set by the application layer, for example, set by the AF.

Alternatively, according to a type of to-be-sent user plane data, the AF sets an IP packet header or an RTP packet header in the downlink data packet encapsulating the type of data, for indicating the priority of the media unit. Alternatively, the priority identifier is set in the IP packet header. For IPv4, the priority identifier may be set in a priority field or a reserved field in a DSCP field (or referred to as a ToS field) in the IP packet header. For IPv6, the priority identifier may be set in a traffic class field in the IP packet header. For example, for an IP data packet carrying a VPS NAL unit, a priority identifier occupying the first three bits in the ToS field of a packet header is set to be equal to 2, for indicating that the priority of the media unit is high priority. For an IP data packet carrying an ROI Tail NAL unit, the priority identifier occupying the first three bits in the ToS field of the packet header is set to be equal to 1, for indicating that the priority of the media unit is a low priority. Alternatively, the AF may also set the RTP packet header in the downlink data packet, for example, the AF sets the priority identifier in a TID field of the RTP packet header to indicate the priority of the media unit.

Alternatively, if the AF determines that the priority of the media unit in the to-be-sent data does not meet set requirements (for example, the priority is lower than a set threshold or the priority is a lowest priority), the data may be discarded or delayed to be sent.

Step 8: after receiving the XR service data flow, the UPF detects the priority identifier in the downlink data packet, and maps the downlink data packet to the corresponding QoS flow according to the priority identifier.

In the present step, since the packet detection rule (PDR) or the second priority detection indication information from the SMF indicates that the priority detection needs to be performed on the media unit and QoS flow mapping needs to be performed based on the priority of the media unit, the UPF first performs priority detection on the received downlink data packet, for example, detecting the priority identifier in the ToS field in the IP packet header; and then, the UPF maps the data packet to the corresponding QoS flow according to the detected priority. For example, if the priority indicated by the detected priority identifier is high priority (such as a data packet carrying an ROI Tail NAL unit), the data packet is mapped to a GBR QoS flow; and if the priority indicated by the detected priority identifier is a low priority (such as a data packet carrying a non-ROI Tail NAL unit), the data packet is mapped to a non-GBR QoS flow.

Step 9: the UPF sends the downlink data packet mapped to the corresponding QoS flow to the gNB.

Step 10: after receiving the downlink data packet, the gNB transmits the downlink data packet through a wireless bearer corresponding to the QoS flow identifier according to the QoS flow identifier (QFI).

In the present step, alternatively, if the QoS flow identifier is a GBR QoS flow identifier, the gNB sends the downlink data packet through a GBR wireless bearer; and if the QoS flow identifier is the non-GBR QoS flow identifier, the gNB sends the downlink data packet through a non-GBR wireless bearer.

Alternatively, when current wireless resources are insufficient or a network is in a congested status, the gNB may discard the data packet carrying the media unit with the lowest priority or delay sending the data packet carrying the media unit with the lowest priority.

The above flow is described by using the example of newly creating the PDU session, and a PDU session update process may also refer to the above flow to achieve data transmission for the XR service. For example, the PDU session create request in the above flow may be replaced with a PDU session update request, and other processing operations are similar to the above flow.

FIG. 13 exemplarily shows a schematic diagram of a data transmission flow. The flow is based on a 5G system architecture shown in FIG. 8, takes XR service data transmission as an example, and performs grading on downlink data packets mapped to the same QoS flow, for enabling the gNB adopting different transmission mechanisms for different priorities.

As shown in FIG. 13, the flow may include the following steps:
step 1: an AF sends priority information to a PCF or an NEF, the priority information being used for indicating a priority of a media unit.

Alternatively, the priority information may be used for indicating a mapping relationship between a priority value and an indication flag. For example, the priority information includes a mapping list between the priority value and the indication flag, and in the mapping list, there is a corresponding relationship between one or more priority values and one indication flag. The indication flag may be set by an application or the AF on a packet header of a data packet transmitted by a user plane for indicating which media unit QoS parameters are applied to. For example, the priority information includes {flag 1=1, priority=3}, indicating that a priority of a media unit carried in a data packet with the indication flag=1 is equal to3, that is, the transmission of the media unit needs to use a group of QoS parameters corresponding to the priority (priority=3).

Alternatively, the priority information may also be used for indicating an order of the media unit in a data frame and the priority of the corresponding order of media unit. For example, the priority information includes {order=3, priority=1 }, indicating that a priority of the third media unit (order=3) in the data frame is equal to 1 (priority=1).

Alternatively, the priority information may also be used for indicating the priority of a specific frame (e.g., I frame/B frame/P frame). For example, the priority information includes {frame type=I, priority= 1 }, indicating that the priority of the media unit carrying the I frame is equal to 1.

Alternatively, the AF may send a session create request containing the priority information to an NEF by calling a Nnef_AFsessionWithQoS_Create service operation, or send a session update request containing the priority information to the NEF by calling an Nnef_AFsessionWithQoS_Update service operation. The AF may also send a policy authorization create request containing the priority information to a PCF by calling a Npcf_PolicyAuthorization_Create service operation, or send a policy authorization update request containing the priority information to the PCF by calling an Npcf_PolicyAuthorization_Update service operation.

Step 2: an SMF receives the PDU session create request sent by UE, and creates a PDU session according to the received request.

Step 3: After receiving the PDU session create request from the UE, the SMF sends a policy control create request (such as an Npcf_SMpolicyControl_Create message) to the PCF to request a control policy from the PCF.

The specific implementation of this step may be shown in step 3 of FIG. 1.

Step 4: After receiving the policy control create request from the SMF, the PCF sends a policy control create response (such as an Npcf_SMpolicyControl_CreateResp message) to the SMF, wherein the response includes a PCC rule, and the PCC rule is used for indicating that a priority of the downlink data packet needs to be detected/determined.

Alternatively, the PCC rule may include the above priority information, and may further include first priority detection indication information, which is used for indicating that the priority of the media unit needs to be detected/determined.

Alternatively, the PCC rule may include the priority information.

The specific implementation of this step may be shown in step 4 of FIG. 11.

Step 5: after receiving the policy control create response, the SMF generates a data packet detection rule (PDR) according to the PCC rule carried in the response, and sends the PDU session create request to the UPF, wherein the request may include the generated PDR, further include the priority information, and may further include the first priority detection indication information.

The specific implementation of this step may be shown in step 5 of FIG. 11.

Step 6: the SMF sends the PDU session create request to the gNB through the AMF, wherein the request includes the first priority detection indication information.

After the PDU session is created, the AF sends an XR service data flow (the plurality of downlink data packets of the XR service form the XR service data flow) to the UPF. Alternatively, a packet header of the downlink data packet includes the indication flag (such as the above flag), and the indication flag corresponds to one or more priority values.

Alternatively, for IPv4, the indication flag (flag) may be set in a priority field or a reserved field in a DSCP field (or referred to as a ToS field) in an IP packet header. For IPv6, the indication flag (flag) may be set in a traffic class field in an IP packet header; and the indication flag (flag) may further be set in a TID field of an RTP packet header.

Alternatively, if the AF determines that the priority of the media unit in the to-be-sent data does not meet set requirements (for example, the priority is lower than a set threshold or the priority is a lowest priority), the data may be discarded or delayed to be sent.

Step 7: after receiving the XR service data flow, the UPF detects or determines the priority of the media unit, and processes the downlink data packet according to the detected/determined priority of the media unit.

In the present step, the UPF may query the priority information (the priority information includes a mapping relationship between the indication flag and the priority value) according to the indication flag (flag) included in the packet header of the data packet to determine the priority of the media unit. The UPF may also query the priority information (the priority information includes a corresponding relationship between an order of the media unit in the data frame and the priority of the media unit) according to the order of the media unit in the data frame to obtain the priority of the media unit. The UPF may further query the priority information (the priority information includes a corresponding relationship between a type of the media unit and the priority of the media unit) according to the type of media unit (such as whether it is an I frame/B frame/P frame) carried in the data packet to determine the priority of the media unit.

The specific implementation of processing the data packet by the UPF in the present step may be shown in step 7 of FIG. 11.

Step 8: the UPF sends the processed IP data packet to the gNB.

The specific implementation of this step may be shown in step 8 of FIG. 11.

Step 9: after receiving the downlink data packet, the gNB detects the priority identifier carried in the downlink data packet, and performs resource scheduling according to the priority identifier.

The specific implementation of this step may be shown in step 9 of FIG. 11.

The above flow is described by using the example of newly creating the PDU session, and a PDU session update process may also refer to the above flow to achieve data transmission for the XR service. For example, the PDU session create request in the above flow may be replaced with a PDU session update request, and other processing operations are similar to the above flow.

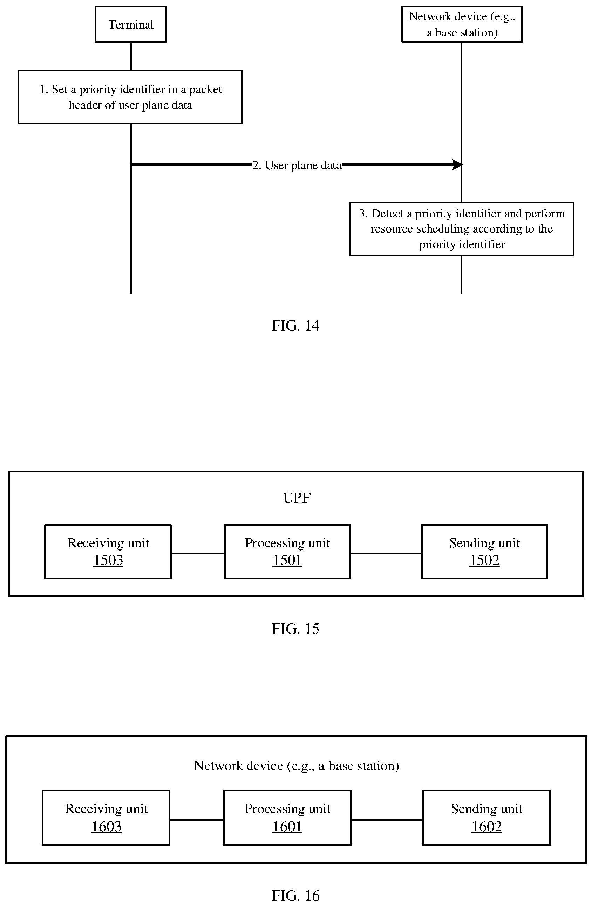

FIG. 14 exemplarily shows a schematic diagram of a data transmission flow. The flow is based on a 5G system architecture shown in FIG. 8, takes XR service data transmission as an example, and performs grading on uplink data packets mapped to the same QoS flow, for enabling the gNB adopting different transmission mechanisms for uplink data packets with different priorities.

The flow may be applied to a data transmission process of an XR service.

As shown in FIG. 14, the flow may include the following steps:
step 1: a terminal sets a priority identifier in a packet header of user plane data, the priority identifier being used for indicating a priority of a media unit.

Alternatively, the terminal may set the priority of the media unit according to a type of the media unit.

Alternatively, for an IPv4 data packet, the terminal may set a priority identifier in a ToS field (or referred to as a DSCP field) of an IP packet header; and for an IPv6 data packet, the terminal sets a priority identifier in a traffic class field of the IP packet header. Alternatively, for an RTP data packet, the terminal may set a priority identifier of the data packet in a TID field of an RTP packet header.

Alternatively, if the terminal determines that the priority of the media unit in to-be-sent data does not meet set requirements (for example, the priority is lower than a set threshold or the priority is a lowest priority), the data may be discarded or delayed to be sent.

Step 2: the terminal sends the user plane data to a network device (e.g., a base station).

Step 3: after receiving the user plane data, the network device (e.g., the base station) detects the priority identifier in the user plane data, and performs resource scheduling according to the priority identifier.

In the present step, the network device (e.g., the base station) detects the priority identifier in the user plane data, determines the priority of the media unit according to the priority identifier, then matches corresponding QoS parameters, and performs resource allocation and scheduling according to the matched QoS parameters. For example, if a value of the detected priority identifier is equal to 3, the base station determines corresponding 5QI according to the priority, acquires a group of locally configured QoS parameters corresponding to the 5QI, and performs resource allocation and scheduling according to the group of QoS parameters.

Alternatively, if the network device (e.g., the base station) determines, according to the priority identifier obtained through detection, that the priority corresponding to the priority identifier does not meet set requirements (for example, the priority is lower than the set threshold, or the priority is the lowest priority), the data may be discarded or delayed to be sent. For example, when current wireless resources are insufficient or a network is in a congested status, the network device (e.g., the base station) may discard the data packet carrying the media unit with the lowest priority or delay sending the data packet carrying the media unit with the lowest priority.

In the above flow, after receiving the user plane data, the UPF detects the priority identifier, and performs resource scheduling according to the priority identifier. Since the priority identifier is used for indicating the priority of the media unit, the network device (e.g., the base station) may optimize resource scheduling according to the priority of the media unit, thereby providing corresponding QoS assurance.

Based on the same technical concept, an embodiment of the present disclosure further provides a UPF network element that can implement the function implemented by the UPF in the aforementioned embodiments.

Referring to FIG. 15, which is a schematic structural diagram of a UPF network element provided by an embodiment of the present disclosure, the UPF network element may include: a processing unit 1501, a sending unit 1502, and a receiving unit 1503.

The receiving unit 1503 is configured to receive user plane data used for transmitting a media unit; the processing unit 1501 is configured to detect or determine a priority of the media unit, and set a priority identifier in the user plane data according to the priority, or map the user plane data to a corresponding QoS flow according to the priority; and the sending unit 1502 is configured to send the user plane data provided with the priority identifier to a network device (e.g., a base station), or send the user plane data mapped to the QoS flow to the network device (e.g., the base station).

Alternatively, a packet header of the user plane data includes a first priority identifier, and the first priority identifier is used for indicating the priority of the media unit; and the processing unit 1501 is specifically configured to: detect the first priority identifier included in the packet header of the user plane data, and set a second priority identifier in the user plane data according to the first priority identifier, the second priority identifier being detected by the network device (e.g., a base station).

Alternatively, the processing unit 1501 is specifically configured to: set the second priority identifier in a GTP-U packet header of the user plane data; or set the second priority identifier in an outer IP packet header of the user plane data.

Alternatively, the second priority identifier is the same as the first priority identifier.

Alternatively, the processing unit 1501 is further configured to: obtain, before setting the second priority identifier in the user plane data, the second priority identifier by modifying a priority level parameter in a group of QoS parameters corresponding to the first priority identifier according to the first priority identifier.

Alternatively, an RTP packet header or an IP packet header of the user plane data includes the first priority identifier. Further, a type of service field or a traffic class field in the IP packet header includes the first priority identifier, or a TID field in the RTP packet header includes the first priority identifier.

Alternatively, the processing unit 1501 is specifically configured to: determine an application layer priority of the media unit according to priority information, the priority information being used for indicating the priority of the media unit.

Alternatively, the priority information is used for indicating a corresponding relationship between an order of the media unit in a data frame and the priority of the media unit, and determining, by the UPF, the priority of the media unit according to the priority information includes: determining, by the UPF, the priority of the media unit according to the order of the media unit in the data frame; or the priority information is used for indicating a corresponding relationship between a type of the media unit and the priority of the media unit, and determining, by the UPF, the priority of the media unit according to the priority information includes: determining, by the UPF, the priority of the media unit according to the type of the media unit; or the priority information is used for indicating a corresponding relationship between the priority of the media unit and an indication flag, and determining, by the UPF, the priority of the media unit according to the priority information includes: determining, by the UPF, a priority corresponding to the indication flag according to the indication flag included in the user plane data.

Alternatively, the receiving unit 1503 is specifically configured to: receive, before the user plane data, priority detection indication information from a session management function (SMF), the priority detection indication information being used for instructing to perform priority detection.

Alternatively, the processing unit 1501 is further configured to: discard the user plane data or delay the transmission of the user plane data, after detecting or determining the priority of the media unit, if it is judged that the priority does not meet set requirements.

It should be noted here that the above UPF network element provided by the embodiment of the present disclosure can implement all the method steps implemented by the above method embodiment, and can achieve the same technical effect, and the parts and beneficial effects same as the method embodiment in this embodiment will not be repeated in detail here.

Based on the same technical concept, an embodiment of the present disclosure further provides a network device (e.g., a base station), and the network device can implement the function implemented by the network device (e.g., the base station) in the aforementioned embodiments.

Referring to FIG. 16, FIG. 16 is a schematic structural diagram of a network device provided by an embodiment of the present disclosure. The network device may include: a processing unit 1601, a sending unit 1602, and a receiving unit 1603.

The receiving unit 1603 is configured to receive user plane data used for transmitting a media unit, the user plane data including a priority identifier, and the priority identifier being used for indicating a priority of the media unit; and the processing unit 1601 is configured to acquire the priority identifier in the user plane data, and perform resource scheduling on transmission of the user plane data according to the priority identifier.

Alternatively, the user plane data is downlink data, and a GTP-U packet header or an outer IP packet header of the user plane data includes the priority identifier; and the processing unit 1601 is specifically configured to: acquire the priority identifier from the GTP-U packet header or the outer IP packet header of the user plane data.

Alternatively, the user plane data is uplink data, and an RTP packet header or an IP packet header of the user plane data includes the priority identifier; and the processing unit 1601 is specifically configured to: acquire the priority identifier from the RTP packet header or the IP packet header of the user plane data.

Alternatively, a type of service field or a traffic class field in the IP packet header includes the priority identifier, or a TID field in the RTP packet header includes the priority identifier.

Alternatively, the receiving unit 1603 is further configured to: receive, before receiving the user plane data, priority detection indication information from an AMF, the priority detection indication information being used for instructing to perform priority detection, wherein the priority detection indication information sent by the AMF is received by the AMF from a session management function (SMF).

Alternatively, the processing unit 1601 is further configured to: discard the user plane data or delay the transmission of the user plane data based on that the priority indicated by the priority identifier does not meet set requirements.

It should be noted here that the above network device provided by the embodiment of the present disclosure can implement all the method steps implemented by the above method embodiment, and can achieve the same technical effect, and the parts and beneficial effects same as the method embodiment in this embodiment will not be repeated in detail here.

Based on the same technical concept, an embodiment of the present disclosure further provides a terminal that can implement the functions implemented by the terminal in the aforementioned embodiments.

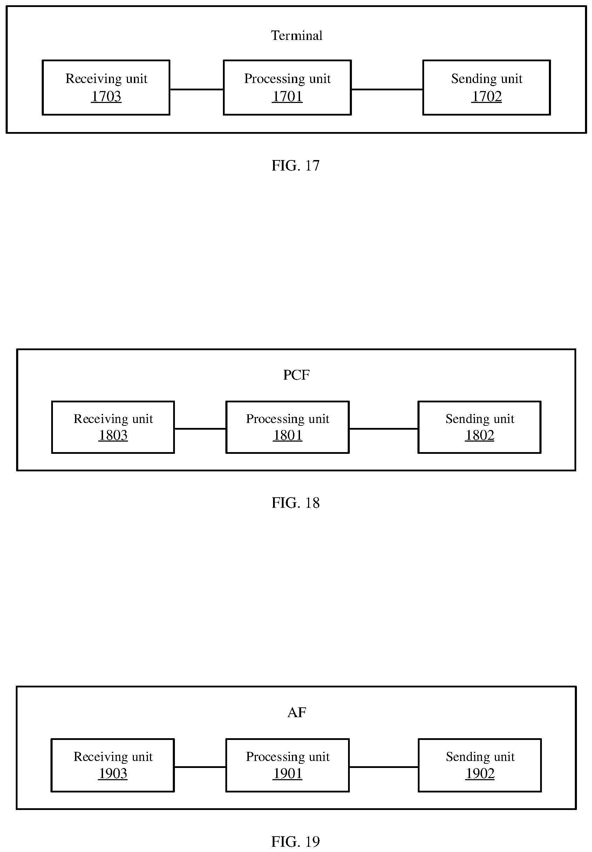

Referring to FIG. 17, FIG. 17 is a schematic structural diagram of a terminal provided by an embodiment of the present disclosure. The terminal may include: a processing unit 1701, a sending unit 1702, and a receiving unit 1703.

The processing unit 1701 is configured to set a priority identifier in to-be-sent user plane data used for transmitting a media unit, the priority identifier being used for indicating a priority of the media unit; and the sending unit 1702 is configured to send the user plane data provided with the priority identifier to a UPF.

Alternatively, the processing unit 1701 is specifically configured to: set the priority identifier in an RTP packet header or an IP packet header of the user plane data.

Alternatively, the processing unit 1701 is specifically configured to: set the priority identifier in a type of service field or a traffic class field in the IP packet header of the user plane data.

Alternatively, the processing unit 1701 is specifically configured to: set the priority identifier in a TID field of the RTP packet header of the user plane data.

Alternatively, the processing unit 1701 is further configured to: discard the user plane data or delay the transmission of the user plane data under the condition of determining that the priority of the media unit does not meet set requirements.

It should be noted here that the above terminal provided by the embodiment of the present disclosure can implement all the method steps implemented by the above method embodiment, and can achieve the same technical effect, and the parts and beneficial effects same as the method embodiment in this embodiment will not be repeated in detail here.

Based on the same technical concept, an embodiment of the present disclosure further provides a PCF network element that can implement the function implemented by a PCF in the aforementioned embodiments.

Referring to FIG. 18, FIG. 18 is a schematic structural diagram of a PCF network element provided by an embodiment of the present disclosure. The PCF network element may include: a processing unit 1801, a sending unit 1802, and a receiving unit 1803.

The receiving unit 1803 is configured to receive a request message from an SMF, the request message being used for requesting acquisition of a PCC; the processing unit 1801 is configured to generate the PCC according to the request message, the PCC being used for instructing to detect a priority of a media unit; and the sending unit 1802 is configured to send a response message to the SMF, the response message including the PCC.

Alternatively, the PCC includes priority detection indication information, and the priority detection indication information is used for instructing to detect the priority of the media unit.

Alternatively, the receiving unit 1803 is further configured to: receive, before receiving the request message from the SMF, the request message from an AF, the request message being used for instructing to detect the priority of the media unit.

Alternatively, the receiving unit 1803 is further configured to: receive, before receiving the request message from the SMF, the request message from the AF, the request message including priority information, and the priority information being used for indicating the priority of the media unit; and the processing unit 1801 is specifically configured to: generate the PCC according to the priority information, the PCC including the priority information.

Alternatively, the priority information is used for indicating a corresponding relationship between an order of the media unit in a data frame and the priority of the media unit; or the priority information is used for indicating a corresponding relationship between a type of the media unit and the priority of the media unit; or the priority information is used for indicating a corresponding relationship between the priority of the media unit and an indication flag. The user plane data sent by the AF includes the indication flag.

It should be noted here that the above PCF network element provided by the embodiment of the present disclosure can implement all the method steps implemented by the above method embodiment, and can achieve the same technical effect, and the parts and beneficial effects same as the method embodiment in this embodiment will not be repeated in detail here.

Based on the same technical concept, an embodiment of the present disclosure further provides an AF network element that can implement the function implemented by an AF in the aforementioned embodiments.

Referring to FIG. 19, FIG. 19 is a schematic structural diagram of an AF network element provided by an embodiment of the present disclosure. The AF network element may include: a processing unit 1901, a sending unit 1902, and a receiving unit 1903.

In one implementation, in the AF network element, the sending unit 1902 is configured to send a request message to a PCF or an NEF, the request message including priority information, and the priority information being used for indicating a priority of a media unit.

In another implementation, in the AF network element, the processing unit 1901 is configured to set a priority identifier in to-be-sent user plane data used for transmitting the media unit, the priority identifier being used for indicating the priority of the media unit; and the sending unit 1902 is configured to send the user plane data provided with the priority identifier to a UPF.

It should be noted here that the above AF network element provided by the embodiment of the present disclosure can implement all the method steps implemented by the above method embodiment, and can achieve the same technical effect, and the parts and beneficial effects same as the method embodiment in this embodiment will not be repeated in detail here.

Based on the same technical concept, the embodiment of the present disclosure further provides a data transmission apparatus that can implement the functions of a UPF, a network device (e.g., a base station), a terminal, a PCF or an AF in the aforementioned embodiments.

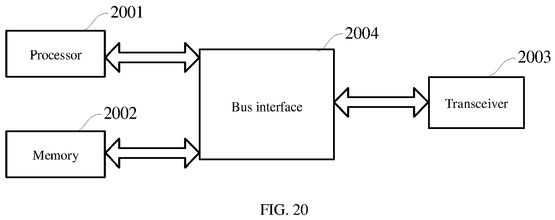

FIG. 20 exemplarily shows a schematic structural diagram of a data transmission apparatus in an embodiment of the present disclosure. As shown in the figure, the data transmission apparatus may include: a processor 2001, a memory 2002, a transceiver 2003 and a bus interface 2004.

The processor 2001 is responsible for managing the bus architecture and usual processing, and the memory 2002 may store data used by the processor 2001 during performing operations. The transceiver 2003 is configured to receive and send data under control of the processor 2001.

The bus architecture may include any quantity of interconnected buses and bridges, which are specifically linked together by various circuits of one or more processors represented by the processor 2001 and a memory represented by the memory 2002. The bus architecture may further link various other circuits such as a peripheral device, a voltage stabilizer and a power management circuit together, which are publicly known in the art and therefore are not further described herein. The bus interface provides an interface. The processor 2001 is responsible for managing the bus architecture and usual processing, and the memory 2002 may store data used by the processor 2001 during performing operations.

A flow disclosed in the embodiment of the present disclosure may be applied to the processor 2001 or be implemented by the processor 2001. In an implementation process, all steps of a signal processing flow may be completed through an integrated logic circuit of hardware in the processor 2001 or through instructions in a software form. The processor 2001 may be a general-purpose processor, a digital signal processor, an application specific integrated circuit, a field-programmable gate array or other programmable logic devices, a discrete gate or a transistor logic device, a discrete hardware component, which can implement or execute all the methods, steps and logic block diagrams disclosed in the embodiment of the present disclosure. The general-purpose processor may be a microprocessor or any conventional processor, etc. The steps of the method disclosed in combination with the embodiment of the present disclosure may be directly embodied as being executed and completed by a hardware processor, or be executed and completed by a hardware and software module combination in the processor. A software module may be located in a random access memory, a flash memory, a read only memory, a programmable read only memory, or an electrically erasable programmable memory, a register and other mature storage mediums in the art. The storage medium is located in the memory 2002, and the processor 2001 reads information in the memory 2002, and is combined with its hardware to complete the steps of the signal processing flow.

Specifically, the processor 2001 is configured to read computer instructions in the memory 2002 and execute functions implemented by relevant devices in the flow shown in any of the figures in FIG. 9 to FIG. 14.

When the data transmission apparatus serves as a UPF, the processor is configured to read computer instructions in the memory and execute: receiving user plane data used for transmitting a media unit; detecting or determining a priority of the media unit; setting a priority identifier in the user plane data according to the priority, and sending the user plane data provided with the priority identifier to a network device, or mapping, by the UPF, the user plane data to a corresponding quality of service (QoS) flow according to the priority, and sending the user plane data mapped to the QoS flow to the network device.

Alternatively, a packet header of the user plane data includes a first priority identifier, and the first priority identifier is used for indicating the priority of the media unit;
detecting or determining, by the processor, the priority of the media unit includes:
detecting the first priority identifier included in the packet header of the user plane data; and
setting the priority identifier in the user plane data according to the priority includes:
setting a second priority identifier in the user plane data according to the first priority identifier, the second priority identifier being detected by the network device.

Alternatively, setting, by the processor, the second priority identifier in the user plane data includes:
setting the second priority identifier in a GPRS tunnelling protocol for the user plane (GTP-U) packet header of the user plane data; or
setting the second priority identifier in an outer Internet protocol (IP) packet header of the user plane data.

Alternatively, the second priority identifier is the same as the first priority identifier.

Alternatively, before setting the second priority identifier in the user plane data, the processor is further configured to:
obtain, by the UPF, the second priority identifier by modifying a priority level parameter in a group of QoS parameters corresponding to the first priority identifier according to the first priority identifier.

Alternatively, a real-time transport protocol (RTP) packet header or an IP packet header of the user plane data includes the first priority identifier.

Alternatively, a type of service field or a traffic class field in the IP packet header includes the first priority identifier, or a TID field in the RTP packet header includes the first priority identifier.

Alternatively, detecting or determining, by the processor, the priority of the media unit includes:
determining, by the UPF, an application layer priority of the media unit according to priority information, the priority information being used for indicating the priority of the media unit.

Alternatively, the priority information is used for indicating a corresponding relationship between an order of the media unit in a data frame and the priority of the media unit, and determining, by the processor, the priority of the media unit according to the priority information includes: determining the priority of the media unit according to the order of the media unit in the data frame; or
the priority information is used for indicating a corresponding relationship between a type of the media unit and the priority of the media unit, and determining, by the processor, the priority of the media unit according to the priority information includes: determining the priority of the media unit according to the type of the media unit; or
the priority information is used for indicating a corresponding relationship between the priority of the media unit and an indication flag, and determining, by the processor, the priority of the media unit according to the priority information includes: determining a priority corresponding to the indication flag according to the indication flag included in the user plane data.

Alternatively, before receiving the user plane data, the processor is further configured to:
receiving, by the UPF, priority detection indication information from a session management function (SMF), the priority detection indication information being used for instructing the UPF to perform priority detection.

Alternatively, after detecting or determining the priority of the media unit, the processor is further configured to: discard, by the UPF, the user plane data or delay, by the UPF, the transmission of the user plane data based on that the priority does not meet set requirements.

When the data transmission apparatus is used as a network device, the processor is configured to read the computer instructions in the memory and execute: receiving user plane data used for transmitting the media unit, the user plane data including a priority identifier, and the priority identifier being used for indicating the priority of the media unit; acquiring the priority identifier in the user plane data; and performing resource scheduling on transmission of the user plane data according to the priority identifier.

Alternatively, the user plane data is downlink data, and a GPRS tunnelling protocol for a user plane (GTP-U) packet header or an outer IP packet header of the user plane data includes the priority identifier; and
acquiring, by the processor, the priority identifier in the user plane data includes:
acquiring the priority identifier from the GTP-U packet header or the outer IP packet header of the user plane data.

Alternatively, the user plane data is uplink data, and a real-time transport protocol (RTP) packet header or an IP packet header of the user plane data includes the priority identifier; and
acquiring, by the processor, the priority identifier in the user plane data includes:
acquiring the priority identifier from the RTP packet header or the IP packet header of the user plane data.

Alternatively, a type of service field or a traffic class field in the IP packet header includes the priority identifier, or a TID field in the RTP packet header includes the priority identifier.

Alternatively, before receiving the user plane data, the processor is further configured to:
receive, by the network device, priority detection indication information from an access and mobility management function (AMF), the priority detection indication information being used for instructing to perform priority detection, wherein the priority detection indication information sent by the AMF is received by the AMF from a session management function (SMF).

Alternatively, the processor is further configured to: discard, by the network device, the user plane data or delay, by the network device, the transmission of the user plane data based on that the priority indicated by the priority identifier does not meet set requirements.

When the data transmission apparatus serves as a terminal, the processor is configured to read computer instructions in the memory and execute: setting a priority identifier in to-be-sent user plane data used for transmitting a media unit, the priority identifier being used for indicating a priority of the media unit; and sending the user plane data provided with the priority identifier to a user plane function (UPF).

Alternatively, setting, by the processor, the priority identifier in the to-be-sent user plane data includes:
setting the priority identifier in a real-time transport protocol (RTP) packet header or an IP packet header of the user plane data.

Alternatively, setting, by the processor, the priority identifier in the IP packet header of the user plane data includes:
setting the priority identifier in a type of service field or a traffic class field in the IP packet header of the user plane data.

Alternatively, setting, by the processor, the priority identifier in the RTP packet header of the user plane data includes:
setting the priority identifier in a TID field of the RTP packet header of the user plane data.

Alternatively, the processor is further configured to:
discard the user plane data or delay the transmission of the user plane data if it is determined that the priority of the media unit does not meet set requirements.

When the data transmission apparatus serves as a PCF, the processor is configured to read computer instructions in the memory and execute: receiving a request message from a session management function (SMF), the request message being used for requesting acquisition of a Policy and Charging Control (PCC); generating the PCC according to the request message, the PCC being used for instructing to detect a priority of a media unit; and sending a response message to the SMF, the response message including the PCC.

Alternatively, the PCC includes priority detection indication information, and the priority detection indication information is used for instructing to detect the priority of the media unit.

Alternatively, before receiving the request message from the SMF, the processor is further configured to: receive the request message from an application function (AF), the request message being used for instructing the PCF to detect the priority of the media unit.

Alternatively, before receiving the request message from the SMF, the processor is further configured to: receive the request message from an AF, the request message including priority information, and the priority information being used for indicating the priority of the media unit; and
generating, by the processor, the PCC according to the request message includes:
generating the PCC according to the priority information, the PCC including the priority information.

Alternatively, the priority information is used for indicating a corresponding relationship between an order of the media unit in a data frame and the priority of the media unit; or
the priority information is used for indicating a corresponding relationship between a type of the media unit and the priority of the media unit; or
the priority information is used for indicating a corresponding relationship between the priority of the media unit and an indication flag, user plane data sent by the AF including the indication flag.

When the data transmission apparatus serves as the AF, the processor is configured to read computer instructions in the memory and execute: sending a request message to a PCF or a network exposure function (NEF), the request message including priority information, and the priority information being used for indicating a priority of a media unit.

Alternatively, the priority information is used for indicating a corresponding relationship between an order of the media unit in a data frame and the priority of the media unit; or
the priority information is used for indicating a corresponding relationship between a type of the media unit and the priority of the media unit; or
the priority information is used for indicating a corresponding relationship between the priority of the media unit and an indication flag, user plane data sent by the AF including the indication flag.

It should be noted here that the above device provided by the embodiment of the present disclosure can implement all the method steps implemented by the above method embodiment, and can achieve the same technical effect, and the parts and beneficial effects same as the method embodiment in this embodiment will not be repeated in detail here.

An embodiment of the present disclosure further provides a computer readable storage medium. The computer readable storage medium stores computer executable instructions, and the computer executable instructions are used for causing a computer to execute the method executed by the above device in the above embodiment.

An embodiment of the present disclosure further provides a computer program product. The computer program product, when called by a computer, causes the computer to execute the method executed by the above device in the above embodiment.

Those skilled in the art should understand that the embodiments of the present disclosure may be provided as methods, systems or computer program products. Therefore, the present disclosure can adopt forms of full hardware embodiments, full software embodiments, or embodiments combining software and hardware aspects. Moreover, the present disclosure may adopt a form of the computer program products implemented on one or more computer available storage mediums (including but not limited to a disk memory, a CD-ROM, an optical memory and the like) containing computer available program codes.

The present disclosure is described with reference to flow diagrams and/or block diagrams of the methods, the devices (systems), and the computer program products according to the present disclosure. It should be understood that each flow and/or block in the flow diagrams and/or the block diagrams and combinations of the flows and/or the blocks in the flow diagrams and/or the block diagrams can be implemented by computer program instructions. These computer program instructions may be provided to a processor of a general-purpose computer, a special-purpose computer, an embedded processing machine or other programmable data processing devices to generate a machine, such that the instructions, when executed by the processor of the computer or other programmable data processing devices, generate an apparatus for implementing functions specified in one or more flows in the flow diagrams and/or one or more blocks in the block diagrams.

These computer program instructions may also be stored in a computer readable memory which can guide the computer or other programmable data processing devices to work in a specific mode, thus the instructions stored in the computer readable memory generates an article of manufacture that includes a command apparatus that implements the functions specified in one or more flows in the flow diagrams and/or one or more blocks in the block diagrams.

These computer program instructions may also be loaded to the computer or other programmable data processing devices, thus a series of operating steps are executed on the computer or other programmable devices to generate computer-implemented processing, such that the instructions executed on the computer or other programmable devices provide steps for implementing the functions specified in one or more flows in the flow diagrams and/or one or more blocks in the block diagrams.

Obviously, those skilled in the art can make various modifications and variations to the present disclosure without departing from the spirit and scope of the present disclosure. In this way, if these modifications and variations of the present disclosure fall within the scope of the claims of the present disclosure and their equivalent art, the present disclosure also intends to include these modifications and variations.

## Claims

1. A data transmission method, comprising:
receiving, by a user plane function (UPF), user plane data used for transmitting a media unit;
detecting or determining, by the UPF, a priority of the media unit; and
setting, by the UPF, a priority identifier in the user plane data according to the priority, and sending the user plane data provided with the priority identifier to a network device, or mapping, by the UPF, the user plane data to a corresponding quality of service (QoS) flow according to the priority, and sending the user plane data mapped to the QoS flow to the network device.

2. The method according to claim 1, wherein a packet header of the user plane data comprises a first priority identifier, and the first priority identifier is used for indicating the priority of the media unit;
detecting or determining, by the UPF, the priority of the media unit comprises:
detecting, by the UPF, the first priority identifier comprised in the packet header of the user plane data; and
setting, by the UPF, the priority identifier in the user plane data according to the priority comprises:
setting, by the UPF, a second priority identifier in the user plane data according to the first priority identifier, the second priority identifier being detected by the network device.

3. The method according to claim 2, wherein setting the second priority identifier in the user plane data comprises:
setting the second priority identifier in a GPRS tunnelling protocol for the user plane (GTP-U) packet header of the user plane data; or
setting the second priority identifier in an outer Internet protocol (IP) packet header of the user plane data.

4. The method according to claim 2, wherein the second priority identifier is the same as the first priority identifier.

5. The method according to claim 2, wherein before setting the second priority identifier in the user plane data, the method further comprises:
obtaining, by the UPF, the second priority identifier by modifying a priority level parameter in a group of QoS parameters corresponding to the first priority identifier according to the first priority identifier.

6. The method according to claim 2, wherein a real-time transport protocol (RTP) packet header or an IP packet header of the user plane data comprises the first priority identifier.

7. The method according to claim 6, wherein a type of service field or a traffic class field in the IP packet header comprises the first priority identifier, or a tag identifier (TID) field in the RTP packet header comprises the first priority identifier.

8. The method according to claim 1, wherein detecting or determining, by the UPF, the priority of the media unit comprises:
determining, by the UPF, an application layer priority of the media unit according to priority information, the priority information being used for indicating the priority of the media unit.

9. The method according to claim 8, wherein the priority information is used for indicating a corresponding relationship between an order of the media unit in a data frame and the priority of the media unit, and determining, by the UPF, the priority of the media unit according to the priority information comprises: determining, by the UPF, the priority of the media unit according to the order of the media unit in the data frame; or
the priority information is used for indicating a corresponding relationship between a type of the media unit and the priority of the media unit, and determining, by the UPF, the priority of the media unit according to the priority information comprises: determining, by the UPF, the priority of the media unit according to the type of the media unit; or
the priority information is used for indicating a corresponding relationship between the priority of the media unit and an indication flag, and determining, by the UPF, the priority of the media unit according to the priority information comprises: determining, by the UPF, a priority corresponding to the indication flag according to the indication flag comprised in the user plane data.

10. The method according to any one of claims 1 to 9, wherein before receiving, by the UPF, the user plane data, the method further comprises:
receiving, by the UPF, priority detection indication information from a session management function (SMF), the priority detection indication information being used for instructing the UPF to perform priority detection.

11. The method according to any one of claims 1 to 9, wherein after detecting or determining, by the UPF, the priority of the media unit, the method further comprises:
discarding, by the UPF, the user plane data or delaying, by the UPF, the transmission of the user plane data based on that the priority does not meet set requirements.

12. A data transmission method, comprising:
receiving, by a network device, user plane data used for transmitting a media unit, the user plane data comprising a priority identifier, and the priority identifier being used for indicating a priority of the media unit;
acquiring, by the network device, the priority identifier in the user plane data; and
performing, by the network device, resource scheduling on transmission of the user plane data according to the priority identifier.

13. The method according to claim 12, wherein the user plane data is downlink data, and a GPRS tunnelling protocol for a user plane (GTP-U) packet header or an outer IP packet header of the user plane data comprises the priority identifier; and
acquiring, by the network device, the priority identifier in the user plane data comprises:
acquiring, by the network device, the priority identifier from the GTP-U packet header or the outer IP packet header of the user plane data.

14. The method according to claim 12, wherein the user plane data is uplink data, and a real-time transport protocol (RTP) packet header or an IP packet header of the user plane data comprises the priority identifier; and
acquiring, by the network device, the priority identifier in the user plane data comprises:
acquiring, by the network device, the priority identifier from the RTP packet header or the IP packet header of the user plane data.

15. The method according to claim 14, wherein a type of service field or a traffic class field in the IP packet header comprises the priority identifier, or a TID field in the RTP packet header comprises the priority identifier.

16. The method according to any one of claims 12 to 15, wherein before receiving, by the network device, the user plane data, the method further comprises:
receiving, by the network device, priority detection indication information from an access and mobility management function (AMF), the priority detection indication information being used for instructing to perform priority detection, wherein the priority detection indication information sent by the AMF is received by the AMF from a session management function (SMF).

17. The method according to any one of claims 12-15, further comprising:
discarding, by the network device, the user plane data or delaying, by the network device, the transmission of the user plane data based on that the priority indicated by the priority identifier does not meet set requirements.

18. A data transmission method, comprising:
setting a priority identifier in to-be-sent user plane data used for transmitting a media unit, the priority identifier being used for indicating a priority of the media unit; and
sending the user plane data provided with the priority identifier to a user plane function (UPF).

19. The method according to claim 18, wherein setting the priority identifier in the to-be-sent user plane data comprises:
setting the priority identifier in a real-time transport protocol (RTP) packet header or an IP packet header of the user plane data.

20. The method according to claim 19, wherein setting the priority identifier in the IP packet header of the user plane data comprises:
setting the priority identifier in a type of service field or a traffic class field in the IP packet header of the user plane data.

21. The method according to claim 19, wherein setting the priority identifier in the RTP packet header of the user plane data comprises:
setting the priority identifier in a TID field of the RTP packet header of the user plane data.

22. The method according to any one of claims 18-21, further comprising:
discarding the user plane data or delaying the transmission of the user plane data if it is determined that the priority of the media unit does not meet set requirements.

23. A data transmission method, comprising:
receiving, by a policy control function (PCF), a request message from a session management function (SMF), the request message being used for requesting acquisition of a Policy and Charging Control rule (PCC);
generating, by the PCF, the PCC according to the request message, the PCC being used for instructing to detect a priority of a media unit; and
sending, by the PCF, a response message to the SMF, the response message comprising the PCC.

24. The method according to claim 23, wherein the PCC comprises priority detection indication information, and the priority detection indication information is used for instructing to detect the priority of the media unit.

25. The method according to claim 24, wherein before receiving, by the PCF, the request message from the SMF, the method further comprises:
receiving, by the PCF, the request message from an application function (AF), the request message being used for instructing the PCF to detect the priority of the media unit.

26. The method according to claim 23, wherein before receiving, by the PCF, the request message from the SMF, the method further comprises:
receiving, by the PCF, the request message from an AF, the request message comprising priority information, and the priority information being used for indicating the priority of the media unit; and
generating, by the PCF, the PCC according to the request message comprises:
generating, by the PCF, the PCC according to the priority information, the PCC comprising the priority information.

27. The method according to claim 26, wherein the priority information is used for indicating a corresponding relationship between an order of the media unit in a data frame and the priority of the media unit; or
the priority information is used for indicating a corresponding relationship between a type of the media unit and the priority of the media unit; or
the priority information is used for indicating a corresponding relationship between the priority of the media unit and an indication flag, user plane data sent by the AF comprising the indication flag.

28. A data transmission method, comprising:
sending, by an application function (AF), a request message to a PCF or a network exposure function (NEF), the request message comprising priority information, and the priority information being used for indicating a priority of a media unit.

29. The method according to claim 28, wherein the priority information is used for indicating a corresponding relationship between an order of the media unit in a data frame and the priority of the media unit; or
the priority information is used for indicating a corresponding relationship between a type of the media unit and the priority of the media unit; or
the priority information is used for indicating a corresponding relationship between the priority of the media unit and an indication flag, user plane data sent by the AF comprising the indication flag.

30. A user plane function (UPF) network element, comprising:
a receiving unit, configured to receive user plane data used for transmitting a media unit;
a processing unit, configured to detect or determine a priority of the media unit, and set a priority identifier in the user plane data according to the priority, or map the user plane data to a corresponding quality of service (QoS) flow according to the priority; and
a sending unit, configured to send the user plane data provided with the priority identifier to a network device, or send the user plane data mapped to the QoS flow to the network device.

31. A network device, comprising:
a receiving unit, configured to receive user plane data used for transmitting a media unit, the user plane data comprising a priority identifier, and the priority identifier being used for indicating a priority of the media unit; and
a processing unit, configured to acquire the priority identifier in the user plane data, and perform resource scheduling on transmission of the user plane data according to the priority identifier.

32. A terminal, comprising:
a processing unit, configured to set a priority identifier in to-be-sent user plane data used for transmitting a media unit, the priority identifier being used for indicating a priority of the media unit; and
a sending unit, configured to send the user plane data provided with the priority identifier to a user plane function (UPF).

33. A policy control function (PCF) network element, comprising:
a receiving unit, configured to receive a request message from a session management function (SMF), the request message being used for requesting acquisition of a Policy and Charging Control rule (PCC);
a processing unit, configured to generate the PCC according to the request message, the PCC being used for instructing to detect a priority of a media unit; and
a sending unit, configured to send a response message to the SMF, the response message comprising the PCC.

34. An application function (AF) network element, comprising:
a sending unit, configured to send a request message to a PCF or a network exposure function (NEF), the request message comprising priority information, and the priority information being used for indicating a priority of a media unit.

35. An application function (AF) network element, comprising:
a processing unit, configured to set a priority identifier in to-be-sent user plane data used for transmitting a media unit, the priority identifier being used for indicating a priority of the media unit; and
a sending unit, configured to send the user plane data provided with the priority identifier to a user plane function (UPF).

36. A data transmission apparatus, wherein the data transmission apparatus, as a UPF, comprises a processor, a memory, and a transceiver;
the transceiver receives and sends data under control of the processor;
the memory stores computer instructions; and
the processor is configured to read the computer instructions to execute:
receiving user plane data used for transmitting a media unit;
detecting or determining a priority of the media unit; and
setting a priority identifier in the user plane data according to the priority, and sending the user plane data provided with the priority identifier to a network device, or mapping, by the UPF, the user plane data to a corresponding quality of service (QoS) flow according to the priority, and sending the user plane data mapped to the QoS flow to the network device.

37. The apparatus according to claim 36, wherein a packet header of the user plane data comprises a first priority identifier, and the first priority identifier is used for indicating the priority of the media unit;
detecting or determining, by the processor, the priority of the media unit comprises:
detecting the first priority identifier comprised in the packet header of the user plane data; and
setting the priority identifier in the user plane data according to the priority comprises:
setting a second priority identifier in the user plane data according to the first priority identifier, the second priority identifier being detected by the network device.

38. The apparatus according to claim 37, wherein setting, by the processor, the second priority identifier in the user plane data comprises:
setting the second priority identifier in a GPRS tunnelling protocol for the user plane (GTP-U) packet header of the user plane data; or
setting the second priority identifier in an outer Internet protocol (IP) packet header of the user plane data.

39. The apparatus according to claim 37, wherein the second priority identifier is the same as the first priority identifier.

40. The apparatus according to claim 37, wherein before setting the second priority identifier in the user plane data, the processor is further configured to:
obtain the second priority identifier by modifying a priority level parameter in a group of QoS parameters corresponding to the first priority identifier according to the first priority identifier.

41. The apparatus according to claim 37, wherein a real-time transport protocol (RTP) packet header or an IP packet header of the user plane data comprises the first priority identifier.

42. The apparatus according to claim 41, wherein a type of service field or a traffic class field in the IP packet header comprises the first priority identifier, or a tag identifier (TID) field in the RTP packet header comprises the first priority identifier.

43. The apparatus according to claim 36, wherein detecting or determining, by the processor, the priority of the media unit comprises:
determining an application layer priority of the media unit according to priority information, the priority information being used for indicating the priority of the media unit.

44. The apparatus according to claim 43, wherein the priority information is used for indicating a corresponding relationship between an order of the media unit in a data frame and the priority of the media unit, and determining, by the processor, the priority of the media unit according to the priority information comprises: determining the priority of the media unit according to the order of the media unit in the data frame; or
the priority information is used for indicating a corresponding relationship between a type of the media unit and the priority of the media unit, and determining, by the processor, the priority of the media unit according to the priority information comprises: determining the priority of the media unit according to the type of the media unit; or
the priority information is used for indicating a corresponding relationship between the priority of the media unit and an indication flag, and determining, by the processor, the priority of the media unit according to the priority information comprises: determining a priority corresponding to the indication flag according to the indication flag comprised in the user plane data.

45. The apparatus according to any one of claims 36 to 44, wherein before receiving the user plane data, the processor is further configured to:
receive priority detection indication information from a session management function (SMF), the priority detection indication information being used for instructing the UPF to perform priority detection.

46. The apparatus according to any one of claims 36 to 44, wherein after detecting or determining the priority of the media unit, the processor is further configured to:
discard the user plane data or delay the transmission of the user plane data based on that the priority does not meet set requirements.

47. A data transmission apparatus, wherein the data transmission apparatus, as a network device, comprises a processor, a memory, and a transceiver;
the transceiver receives and sends data under control of the processor;
the memory stores computer instructions; and
the processor is configured to read the computer instructions to execute:
receiving user plane data used for transmitting a media unit, the user plane data comprising a priority identifier, and the priority identifier being used for indicating a priority of the media unit;
acquiring the priority identifier in the user plane data; and
performing resource scheduling on transmission of the user plane data according to the priority identifier.

48. The apparatus according to claim 47, wherein the user plane data is downlink data, and a GPRS tunnelling protocol for a user plane (GTP-U) packet header or an outer IP packet header of the user plane data comprises the priority identifier; and
acquiring, by the processor, the priority identifier in the user plane data comprises:
acquiring the priority identifier from the GTP-U packet header or the outer IP packet header of the user plane data.

49. The apparatus according to claim 47, wherein the user plane data is uplink data, and a real-time transport protocol (RTP) packet header or an IP packet header of the user plane data comprises the priority identifier; and
acquiring, by the processor, the priority identifier in the user plane data comprises:
acquiring the priority identifier from the RTP packet header or the IP packet header of the user plane data.

50. The apparatus according to claim 49, wherein a type of service field or a traffic class field in the IP packet header comprises the priority identifier, or a TID field in the RTP packet header comprises the priority identifier.

51. The apparatus according to any one of claims 47 to 50, wherein before receiving the user plane data, the processor is further configured to:
receive priority detection indication information from an access and mobility management function (AMF), the priority detection indication information being used for instructing to perform priority detection, wherein the priority detection indication information sent by the AMF is received by the AMF from a session management function (SMF).

52. The apparatus according to any one of claims 47 to 50, wherein the processor is further configured to:
discard the user plane data or delay the transmission of the user plane data based on that the priority indicated by the priority identifier does not meet set requirements.

53. A data transmission apparatus, wherein the data transmission apparatus, as a terminal, comprises a processor, a memory, and a transceiver;
the transceiver receives and sends data under control of the processor;
the memory stores computer instructions; and
the processor is configured to read the computer instructions to execute:
setting a priority identifier in to-be-sent user plane data used for transmitting a media unit, the priority identifier being used for indicating a priority of the media unit; and
sending the user plane data provided with the priority identifier to a user plane function (UPF).

54. The apparatus according to claim 53, wherein setting, by the processor, the priority identifier in the to-be-sent user plane data comprises:
setting the priority identifier in a real-time transport protocol (RTP) packet header or an IP packet header of the user plane data.

55. The apparatus according to claim 54, wherein setting, by the processor, the priority identifier in the IP packet header of the user plane data comprises:
setting the priority identifier in a type of service field or a traffic class field in the IP packet header of the user plane data.

56. The apparatus according to claim 54, wherein setting, by the processor, the priority identifier in the RTP packet header of the user plane data comprises:
setting the priority identifier in a TID field of the RTP packet header of the user plane data.

57. The apparatus according to any one of claims 53 to 56, wherein the processor is further configured to:
discard the user plane data or delay the transmission of the user plane data if it is determined that the priority of the media unit does not meet set requirements.

58. A data transmission apparatus, wherein the data transmission apparatus, as a PCF network element, comprises a processor, a memory, and a transceiver;
the transceiver receives and sends data under control of the processor;
the memory stores computer instructions; and
the processor is configured to read the computer instructions to execute:
receiving a request message from a session management function (SMF), the request message being used for requesting acquisition of a Policy and Charging Control rule (PCC);
generating the PCC according to the request message, the PCC being used for instructing to detect a priority of a media unit; and
sending a response message to the SMF, the response message comprising the PCC.

59. The apparatus according to claim 58, wherein the PCC comprises priority detection indication information, and the priority detection indication information is used for instructing to detect the priority of the media unit.

60. The apparatus according to claim 59, wherein before receiving the request message from the SMF, the processor is further configured to:
receive the request message from an application function (AF), the request message being used for instructing the PCF to detect the priority of the media unit.

61. The apparatus according to claim 58, wherein before receiving the request message from the SMF, the processor is further configured to:
receive the request message from an AF, the request message comprising priority information, and the priority information being used for indicating the priority of the media unit; and
generating the PCC according to the request message comprises:
generating the PCC according to the priority information, the PCC comprising the priority information.

62. The apparatus according to claim 61, wherein the priority information is used for indicating a corresponding relationship between an order of the media unit in a data frame and the priority of the media unit; or
the priority information is used for indicating a corresponding relationship between a type of the media unit and the priority of the media unit; or
the priority information is used for indicating a corresponding relationship between the priority of the media unit and an indication flag, user plane data sent by the AF comprising the indication flag.

63. A data transmission apparatus, wherein the data transmission apparatus, as an AF, comprises a processor, a memory, and a transceiver;
the transceiver receives and sends data under control of the processor;
the memory stores computer instructions; and
the processor is configured to read the computer instructions to execute:
sending a request message to a PCF or a network exposure function (NEF), the request message comprising priority information, and the priority information being used for indicating a priority of a media unit.

64. The apparatus according to claim 63, wherein the priority information is used for indicating a corresponding relationship between an order of the media unit in a data frame and the priority of the media unit; or
the priority information is used for indicating a corresponding relationship between a type of the media unit and the priority of the media unit; or
the priority information is used for indicating a corresponding relationship between the priority of the media unit and an indication flag, user plane data sent by the AF comprising the indication flag.

65. A data transmission apparatus, wherein the data transmission apparatus, as an AF, comprises a processor, a memory, and a transceiver;
the transceiver receives and sends data under control of the processor;
the memory stores computer instructions; and
the processor is configured to read the computer instructions to execute:
sending a request message to a PCF or a network exposure function (NEF), the request message comprising priority information, and the priority information being used for indicating a priority of a media unit.

66. A computer readable storage medium, wherein the computer readable storage medium stores computer executable instructions, and the computer executable instructions are used for causing a computer to execute the method according to any one of claims 1 to 11, or the method according to any one of claims 12 to 17, or the method according to any one of claims 18 to 22, or the method according to any one of claims 23 to 27, or the method according to any one of claims 28 to 29.

67. A computer program product, wherein the computer program product, when called by a computer, causes the computer to execute the method according to any one of claims 1 to 11, or the method according to any one of claims 12 to 17, or the method according to any one of claims 18 to 22, or the method according to any one of claims 23 to 27, or the method according to any one of claims 28 to 29.
